# EUROPEAN PATENT APPLICATION

(11) **EP 4 811 920 A1**
(43) Date of publication of application: **23.09.2026**
(21) Application number: 24896716.8
(22) Date of filing: 29.11.2024
(51) Int. Cl.: H04W 74/0833

(54) **RANDOM ACCESS METHOD AND APPARATUS**

(30) Priority: 30.11.2023 CN 202311655859
(71) Applicant: Huawei Technologies Co., Ltd., Shenzhen, Guangdong 518129 (CN)
(72) Inventor: YOU, Chunhua, Shenzhen, Guangdong 518129 (CN); LOU, Chong, Shenzhen, Guangdong 518129 (CN); GU, Zhifang, Shenzhen, Guangdong 518129 (CN); FAN, Qiang, Shenzhen, Guangdong 518129 (CN)
(74) Representative: Körber, Martin Hans
(86) International application number: PCT/CN2024/135648
(87) International publication number: WO 2025/113634

(57) **Abstract**

This application relates to the field of wireless communication technologies, and provides a random access method and an apparatus, to improve random access reliability. In the method, a terminal device receives configuration information from a network device, where the configuration information indicates a first quantity of times and a first random access resource corresponding to the first quantity of times. The first random access resource and the first quantity of times correspond to N beams, the first quantity of times is greater than 1, and N is an integer greater than 1. The terminal device sends a first preamble based on the N beams and the first random access resource. A quantity of transmissions of the first preamble on the N beams is the first quantity of times. Based on this solution, the terminal device may send a random access preamble by using a plurality of beams. In comparison with sending a random access preamble by using a single beam, this solution can improve uplink coverage and improve random access reliability.

## Description

### CROSS-REFERENCE TO RELATED APPLICATIONS

This application claims priority to Chinese Patent Application No. 202311655859.1, filed with the China National Intellectual Property Administration on November 30, 2023 and entitled "RANDOM ACCESS METHOD AND APPARATUS", which is incorporated herein by reference in its entirety.

### TECHNICAL FIELD

This application relates to the field of wireless communication technologies, and in particular, to a random access method and an apparatus.

### BACKGROUND

Currently, a terminal device may establish a connection to a network device through random access, to obtain communication services. Random access may be classified into contention-based random access and non-contention-based random access. However, regardless of the contention-based random access or the non-contention-based random access, the terminal device uses a single beam to send a random access message 1 (message 1, Msg1), leading to a high random access delay. For example, in the case of weak coverage, when the terminal device sends the Msg1 by using the single beam, the network device may fail to effectively and accurately receive the Msg1, resulting in a relatively large number of Msg1 retransmissions by the terminal device, increasing the random access delay of the terminal device, and possibly preventing the terminal device from accessing the network device quickly.

### SUMMARY

This application provides a random access method and an apparatus, to improve random access reliability.

According to a first aspect, a random access method is provided. The method may be performed by a terminal device, or may be performed by a chip/chip system. An example in which the method is performed by the terminal device is used for description. In the method, the terminal device receives configuration information from a network device, where the configuration information indicates a first quantity of times and a first random access resource corresponding to the first quantity of times. The first random access resource and the first quantity of times correspond to N beams, the first quantity of times is greater than 1, and N is an integer greater than 1. The terminal device sends a first preamble based on the N beams and the first random access resource. A quantity of transmissions of the first preamble on the N beams is the first quantity of times.

Based on this solution, the terminal device may send a random access preamble by using a plurality of beams. In comparison with sending a random access preamble by using a single beam, this solution can improve uplink coverage and improve random access reliability.

In a possible implementation, the configuration information further indicates a second quantity of times, and a quantity of transmissions of the first preamble on each of the N beams is the second quantity of times. Based on this solution, the network device may indicate, to the terminal device, the quantity of transmissions of the preamble on each beam, and the terminal device may send the preamble on each beam based on an indication of the network device, where the quantity of transmissions of the preamble on each beam meets the second quantity of times.

In a possible implementation, the first random access resource includes a time domain resource for first random access and/or the first preamble.

In a possible implementation, sending the first preamble based on the N beams corresponds to first-type random access, and the configuration information further indicates a trigger event of the first-type random access. The trigger event includes one or more of the following: beam failure recovery, radio connection establishment, radio connection resume, uplink synchronization, or cell handover.

Based on this solution, the network device may indicate, to the terminal device, a trigger event of multi-beam random access, so that the terminal device can determine when to perform multi-beam random access and when to perform single-beam random access.

In a possible implementation, the terminal device receives a random access response from the network device, where the random access response includes an identifier of a part of random access resources among the first random access resource. The identifier of the part of random access resources corresponds to a first beam in the N beams. The terminal device sends uplink data and/or uplink control information based on the first beam.

Based on the foregoing solution, the terminal device may determine, based on the identifier of the part of random access resources indicated by the network device, an uplink beam used for sending the uplink data and/or the uplink control information.

In a possible implementation, the configuration information further indicates a second random access resource, the second random access resource corresponds to one beam, and the first random access resource and the second random access resource correspond to a feature of message 1 repetition.

Based on the foregoing solution, that the second random access resource corresponds to one beam may be understood as that the second random access resource is a single-beam random access resource. In this case, the single-beam random access resource and a multi-beam random access resource may be set to be corresponding to a same feature, that is, the feature of the message 1 repetition.

In a possible implementation, the first random access resource and the second random access resource belong to a same random access resource group. Based on the foregoing solution, the single-beam random access resource and the multi-beam random access resource may be grouped into a same group, so that resource overheads can be reduced, and complexity of the terminal can be reduced.

In a possible implementation, the terminal device receives, from the network device, a priority corresponding to the feature of the message 1 repetition. The priority is used to select the random access resource group corresponding to the feature of the message 1 repetition. For example, it is assumed that the terminal device needs to send the message 1 repetition and perform small data transmission. The priority corresponding to the feature of the message 1 repetition is higher than a priority corresponding to an SDT feature. In this case, the terminal device may select the random access resource group corresponding to the feature of the message 1 repetition with a high priority, to ensure that the terminal device successfully accesses the network device. Because a random access resource of the message 1 repetition of a single beam and a random access resource of the message 1 repetition of a plurality of beams correspond to a same group and a same feature priority, resource overheads are reduced, and complexity of the terminal is reduced.

In a possible implementation, sending a preamble based on a plurality of beams corresponds to the first-type random access, sending a preamble based on one beam corresponds to second-type random access, the configuration information further indicates a first maximum quantity of transmissions, the first maximum quantity of transmissions is a maximum quantity of transmissions of the preamble of the first-type random access, and the first maximum quantity of transmissions is used to control a fallback from the first-type random access to the second-type random access. The preamble of the first-type random access includes the first preamble. In a possible implementation, the preamble of the second-type random access is sent when a quantity of transmissions of the preamble of the first-type random access reaches the first maximum quantity of transmissions.

For example, the terminal device sends the first preamble by using the N beams. If the terminal device does not receive a random access response for the first preamble, it may be considered that preamble transmission of the multi-beam random access fails. The terminal device may send the preamble of the multi-beam random access again, for example, a second preamble. If the terminal device does not receive a random access response for the second preamble, it may be considered that preamble transmission of the multi-beam random access fails. In this case, it is considered that a quantity of accumulated preamble retransmission failures of the multi-beam random access is two. If a quantity of preamble transmission failures of the multi-beam random access is greater than or equal to the first maximum quantity of transmissions, the terminal device may perform a fallback. In other words, the terminal may fall back from the multi-beam random access to the single-beam random access.

Based on the foregoing solution, a random access fallback can be used to avoid that the terminal device performs radio resource control (radio resource control, RRC) re-establishment excessively early, which causes service interruption and affects service experience.

In a possible implementation, sending a preamble based on a plurality of beams corresponds to the first-type random access, sending a preamble based on one beam corresponds to second-type random access, the configuration information further indicates a second maximum quantity of transmissions, the second maximum quantity of transmissions is a maximum quantity of transmissions of the preamble of the second-type random access, and the second maximum quantity of transmissions is used to control a fallback from the second-type random access to the first-type random access. The terminal device sends the first preamble based on the N beams and the first random access resource when a quantity of transmissions of the preamble of the second-type random access reaches the second maximum quantity of transmissions.

For example, before sending the first preamble, the terminal device may perform single-beam random access, and send the preamble by using the single beam. If the terminal device does not receive the random access response for the preamble, it may be considered that preamble transmission of the single-beam random access fails. The terminal device may send the preamble of the single-beam random access again. If the terminal device does not receive a random access response for the preamble, it may be considered that preamble transmission of the single-beam random access fails. In this case, it is considered that a quantity of accumulated preamble retransmission failures of the single-beam random access is two. If a quantity of preamble transmission failures of the single-beam random access is greater than or equal to the second maximum quantity of transmissions, the terminal device may perform a fallback. In other words, the terminal may fall back from the single-beam random access to the multi-beam random access, and send the first preamble by using the N beams.

Based on the foregoing solution, a random access fallback can be used to avoid that the terminal device performs RRC re-establishment excessively early, which causes service interruption and affects service experience.

In a possible implementation, the configuration information further indicates a third maximum quantity of transmissions, and the third maximum quantity of transmissions is greater than or equal to the first maximum quantity of transmissions, and is greater than or equal to the second maximum quantity of transmissions. When a quantity of transmissions of a transmitted preamble reaches the third maximum quantity of transmissions, that a random access procedure fails is determined. The transmitted preamble includes the preamble of the first-type random access and the preamble of the second-type random access.

For example, if a quantity of transmission failures of the preamble of the single-beam random access and the preamble of the multi-beam random access that are sent by the terminal device is greater than or equal to the third maximum quantity of transmissions, it may be determined that the random access procedure fails. Optionally, the terminal device may perform an RRC re-establishment procedure.

Based on the foregoing solution, it may be determined, based on the third maximum quantity of transmissions, that the random access procedure fails. In this way, the terminal device may perform an RRC re-establishment procedure, and access the network device by using another cell.

According to a second aspect, a random access method is provided. The method may be performed by a network device, or may be performed by a chip/chip system. An example in which the method is performed by the network device is used for description. In the method, the network device sends configuration information, where the configuration information indicates a first quantity of times and a first random access resource corresponding to the first quantity of times. The first random access resource and the first quantity of times correspond to N beams, the first quantity of times is greater than 1, and N is an integer greater than 1. The network device receives a first preamble on the first random access resource. A quantity of transmissions of the first preamble on the N beams is the first quantity of times.

In a possible implementation, the configuration information further indicates a second quantity of times, and a quantity of transmissions of the first preamble on each of the N beams is the second quantity of times.

In a possible implementation, the first random access resource includes a time domain resource for first random access and/or the first preamble.

In a possible implementation, that the first preamble is sent on the N beams corresponds to first-type random access, and the configuration information further indicates a trigger event of the first-type random access. The trigger event includes one or more of the following: beam failure recovery, radio connection establishment, radio connection resume, uplink synchronization, and cell handover.

In a possible implementation, the network device sends a random access response, where the random access response includes an identifier of a part of random access resources among the first random access resource, and the identifier of the part of random access resources corresponds to a first beam in the N beams. The network device receives uplink data and/or uplink control information.

In a possible implementation, the configuration information further indicates a second random access resource, the second random access resource corresponds to one beam, and the first random access resource and the second random access resource correspond to a feature of message 1 repetition.

In a possible implementation, the first random access resource and the second random access resource belong to a same random access resource group.

In a possible implementation, the network device sends a priority corresponding to the feature of the message 1 repetition. The priority is used to select the random access resource group corresponding to the feature of the message 1 repetition.

In a possible implementation, sending a preamble on a plurality of beams corresponds to the first-type random access, sending a preamble on one beam corresponds to second-type random access, the configuration information further indicates a first maximum quantity of transmissions, the first maximum quantity of transmissions is a maximum quantity of transmissions of the preamble of the first-type random access, and the first maximum quantity of transmissions is used to control a fallback from the first-type random access to the second-type random access. The preamble of the first-type random access includes the first preamble.

In a possible implementation, sending a preamble on a plurality of beams corresponds to the first-type random access, sending a preamble on one beam corresponds to second-type random access, the configuration information further indicates a second maximum quantity of transmissions, the second maximum quantity of transmissions is a maximum quantity of transmissions of the preamble of the second-type random access, and the second maximum quantity of transmissions is used to control a fallback from the second-type random access to the first-type random access.

In a possible implementation, the configuration information further indicates a third maximum quantity of transmissions, and the third maximum quantity of transmissions is greater than or equal to the first maximum quantity of transmissions, and is greater than or equal to the second maximum quantity of transmissions. The third maximum quantity of transmissions is used to control a random access procedure to fail.

According to a third aspect, a communication apparatus is provided, including a processing unit and a transceiver unit.

The transceiver unit is configured to receive configuration information from a network device, where the configuration information indicates a first quantity of times and a first random access resource corresponding to the first quantity of times. The first random access resource and the first quantity of times correspond to N beams, the first quantity of times is greater than 1, and N is an integer greater than 1. The processing unit is configured to determine the N beams and the first random access resource. The transceiver unit is further configured to send a first preamble based on the N beams and the first random access resource. A quantity of transmissions of the first preamble on the N beams is the first quantity of times.

In a possible implementation, the configuration information further indicates a second quantity of times, and a quantity of transmissions of the first preamble on each of the N beams is the second quantity of times.

In a possible implementation, the first random access resource includes a time domain resource for first random access and/or the first preamble.

In a possible implementation, sending the first preamble based on the N beams corresponds to first-type random access, and the configuration information further indicates a trigger event of the first-type random access. The trigger event includes one or more of the following: beam failure recovery, radio connection establishment, radio connection resume, uplink synchronization, and cell handover.

In a possible implementation, the transceiver unit is further configured to receive a random access response from the network device, where the random access response includes an identifier of a part of random access resources among the first random access resource, and the identifier of the part of random access resources corresponds to a first beam in the N beams. The transceiver unit is further configured to send uplink data and/or uplink control information based on the first beam.

In a possible implementation, the configuration information further indicates a second random access resource, the second random access resource corresponds to one beam, and the first random access resource and the second random access resource correspond to a feature of message 1 repetition.

In a possible implementation, the first random access resource and the second random access resource belong to a same random access resource group.

In a possible implementation, the transceiver unit is further configured to receive, from the network device, a priority corresponding to the feature of the message 1 repetition. The priority is used to select the random access resource group corresponding to the feature of the message 1 repetition.

In a possible implementation, sending a preamble based on a plurality of beams corresponds to the first-type random access, sending a preamble based on one beam corresponds to second-type random access, the configuration information further indicates a first maximum quantity of transmissions, the first maximum quantity of transmissions is a maximum quantity of transmissions of the preamble of the first-type random access, and the first maximum quantity of transmissions is used to control a fallback from the first-type random access to the second-type random access. The preamble of the first-type random access includes the first preamble.

In a possible implementation, the transceiver unit is further configured to send the preamble of the second-type random access when a quantity of transmissions of the preamble of the first-type random access reaches the first maximum quantity of transmissions.

In a possible implementation, sending a preamble based on a plurality of beams corresponds to the first-type random access, sending a preamble based on one beam corresponds to second-type random access, the configuration information further indicates a second maximum quantity of transmissions, the second maximum quantity of transmissions is a maximum quantity of transmissions of the preamble of the second-type random access, and the second maximum quantity of transmissions is used to control a fallback from the second-type random access to the first-type random access. For example, the transceiver unit is specifically configured to send the first preamble based on the N beams and the first random access resource when a quantity of transmissions of the preamble of the second-type random access reaches the second maximum quantity of transmissions.

In a possible implementation, the configuration information further indicates a third maximum quantity of transmissions, and the third maximum quantity of transmissions is greater than or equal to the first maximum quantity of transmissions, and is greater than or equal to the second maximum quantity of transmissions. Optionally, the third maximum quantity of transmissions is used to control a random access procedure to fail. For example, the processing unit is configured to determine that the random access procedure fails when a quantity of transmissions of a transmitted preamble reaches the third maximum quantity of transmissions. The transmitted preamble includes the preamble of the first-type random access and the preamble of the second-type random access.

According to a fourth aspect, a communication apparatus is provided, including a processing unit and a transceiver unit.

The processing unit is configured to determine configuration information, where the configuration information indicates a first quantity of times and a first random access resource corresponding to the first quantity of times. The first random access resource and the first quantity of times correspond to N beams, the first quantity of times is greater than 1, and N is an integer greater than 1. The transceiver unit is configured to send the configuration information. The transceiver unit is further configured to receive a first preamble on the first random access resource. A quantity of transmissions of the first preamble on the N beams is the first quantity of times.

In a possible implementation, the configuration information further indicates a second quantity of times, and a quantity of transmissions of the first preamble on each of the N beams is the second quantity of times.

In a possible implementation, the first random access resource includes a time domain resource for first random access and/or the first preamble.

In a possible implementation, that the first preamble is sent on the N beams corresponds to first-type random access, and the configuration information further indicates a trigger event of the first-type random access. The trigger event includes one or more of the following: beam failure recovery, radio connection establishment, radio connection resume, uplink synchronization, and cell handover.

In a possible implementation, the transceiver unit is further configured to send a random access response, where the random access response includes an identifier of a part of random access resources among the first random access resource, and the identifier of the part of random access resources corresponds to a first beam in the N beams. The transceiver unit is further configured to receive uplink data and/or uplink control information.

In a possible implementation, the configuration information further indicates a second random access resource, the second random access resource corresponds to one beam, and the first random access resource and the second random access resource correspond to a feature of message 1 repetition.

In a possible implementation, the first random access resource and the second random access resource belong to a same random access resource group.

In a possible implementation, the transceiver unit is further configured to send a priority corresponding to the feature of the message 1 repetition. The priority is used to select the random access resource group corresponding to the feature of the message 1 repetition.

In a possible implementation, sending a preamble on a plurality of beams corresponds to the first-type random access, sending a preamble on one beam corresponds to second-type random access, the configuration information further indicates a first maximum quantity of transmissions, the first maximum quantity of transmissions is a maximum quantity of transmissions of the preamble of the first-type random access, and the first maximum quantity of transmissions is used to control a fallback from the first-type random access to the second-type random access. The preamble of the first-type random access includes the first preamble.

In a possible implementation, sending a preamble on a plurality of beams corresponds to the first-type random access, sending a preamble on one beam corresponds to second-type random access, the configuration information further indicates a second maximum quantity of transmissions, the second maximum quantity of transmissions is a maximum quantity of transmissions of the preamble of the second-type random access, and the second maximum quantity of transmissions is used to control a fallback from the second-type random access to the first-type random access.

In a possible implementation, the configuration information further indicates a third maximum quantity of transmissions, and the third maximum quantity of transmissions is greater than or equal to the first maximum quantity of transmissions, and is greater than or equal to the second maximum quantity of transmissions. The third maximum quantity of transmissions is used to control a random access procedure to fail.

According to a fifth aspect, this application provides a communication apparatus, including a processor, where the processor is coupled to a memory, the memory is configured to store a computer program or instructions, and the processor is configured to execute the computer program or the instructions, to perform the method according to each implementation of the first aspect and the second aspect. The memory may be located inside or outside the apparatus. There is one or more processors.

According to a sixth aspect, this application provides a communication apparatus, including a processor and an interface circuit. The interface circuit is configured to communicate with another apparatus, and the processor is configured to perform the method according to each implementation of the first aspect and the second aspect.

According to a seventh aspect, a communication apparatus is provided. The apparatus includes a logic circuit and an input/output interface.

According to an eighth aspect, this application provides a communication system, including a terminal device and a network device that are configured to perform the method according to each implementation of the first aspect and the second aspect.

According to a ninth aspect, this application further provides a chip system, including a processor, configured to perform the method according to each implementation of the first aspect and the second aspect.

According to a tenth aspect, this application further provides a computer program product, including computer-executable instructions. When the computer-executable instructions are run on a computer, the method according to each implementation of the first aspect and the second aspect is performed.

According to an eleventh aspect, this application further provides a computer-readable storage medium. The computer-readable storage medium stores a computer program or instructions. When the instructions are run on a computer, the method according to each implementation of the first aspect and the second aspect is implemented.

For technical effects achieved in the second aspect to the eleventh aspect, refer to the technical effects in the first aspect. Details are not described herein again.

### BRIEF DESCRIPTION OF DRAWINGS

FIG. 1 is a diagram of a communication system according to an embodiment of this application;
FIG. 2 is a schematic flowchart of random access;
FIG. 3 is an example flowchart of a random access method according to an embodiment of this application;
FIG. 4A is a diagram of a preamble sending manner according to an embodiment of this application;
FIG. 4B is a diagram of another preamble sending manner according to an embodiment of this application;
FIG. 5A is a diagram of another preamble sending manner according to an embodiment of this application;
FIG. 5B is a diagram of another preamble sending manner according to an embodiment of this application;
FIG. 6 is a diagram of a resource group according to an embodiment of this application;
FIG. 7 is a diagram of a communication apparatus according to an embodiment of this application;
FIG. 8 is a diagram of another communication apparatus according to an embodiment of this application;
FIG. 9 is a diagram of another communication apparatus according to an embodiment of this application; and
FIG. 10 is a diagram of another communication apparatus according to an embodiment of this application.

### DESCRIPTION OF EMBODIMENTS

For ease of understanding of the technical solutions provided in embodiments of this application, the following explains and describes technical terms in embodiments of this application.
(1) Repetitive transmission may be understood as transmitting same information multiple times or transmitting multiple pieces of same information, for example, a random access preamble of or a random access message 1. It may be understood that repetitive transmission may be transmitting same information multiple times over a plurality of time domain resources, where the same information is transmitted once on each time domain resource. For example, the preamble is repeatedly transmitted on a plurality of time domain resources. The time domain resources may include a resource A and a resource B. The preamble may be transmitted on the resource A and the resource B. Preambles transmitted on the resource A and the resource B are identical.
(2) A quantity of repetitive transmissions, also referred to as a repetition quantity, a transmission quantity, a quantity of repetitions, may be understood as a quantity of transmissions of same information (for example, a random access preamble of or a random access message 1). As described above, if the preamble is sent on a resource A and a resource B, the quantity of repetitive transmissions of the preamble is 2, and preamble transmissions on the resource A and the resource B may each be considered as one repetitive transmission.

The technical solutions in embodiments of this application may be applied to a new radio (New Radio, NR) system, a long term evolution (Long Term Evolution, LTE) system, an LTE frequency division duplex (Frequency Division Duplex, FDD) system, an LTE time division duplex (Time Division Duplex, TDD) system, a worldwide interoperability for microwave access (Worldwide Interoperability for Microwave Access, WiMAX) communication system, a next-generation wireless communication system, for example, 6G, and the like. This is not limited herein.

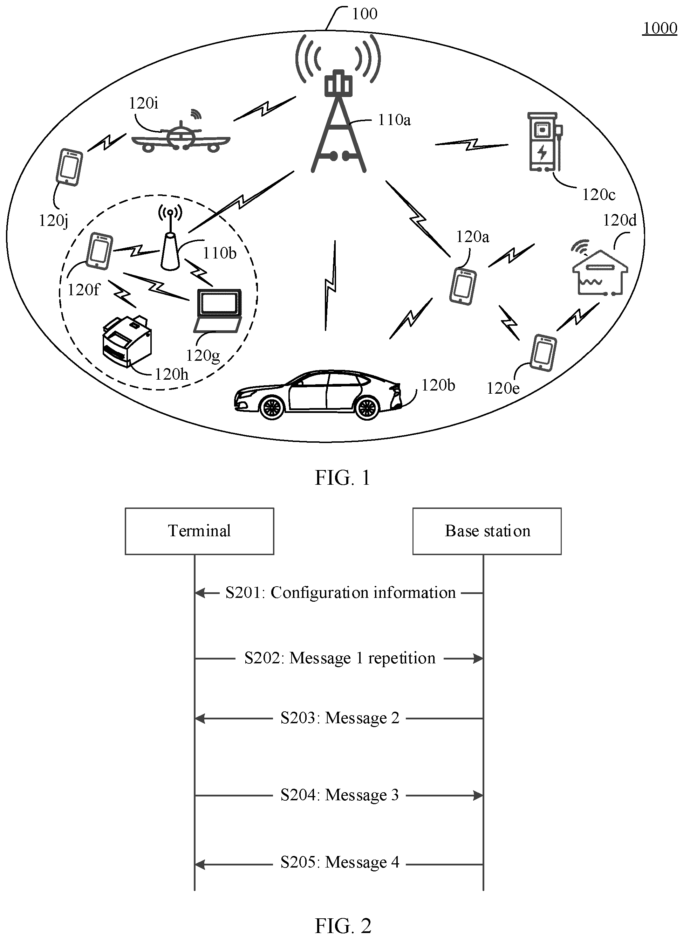

FIG. 1 is a diagram of an architecture of a communication system 1000 to which an embodiment of this application is applied. As shown in FIG. 1, the communication system includes a radio access network 100. The radio access network 100 may include at least one network device (for example, 110a and/or 110b in FIG. 1), and may further include at least one terminal apparatus (for example, at least one of 120a to 120j in FIG. 1). The terminal apparatus is connected to an access network device in a wireless manner, and the access network device is connected to a core network device in a wireless or wired manner. Terminal apparatuses may be connected to each other in a wired or wireless manner, and network devices may be connected to each other in a wired or wireless manner. FIG. 1 is merely a diagram. The communication system may further include another network device, for example, may further include a wireless relay device and a wireless backhaul device, which are not shown in FIG. 1.

The network device is a network-side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of the base station, for example, may be a central unit (central unit, CU) or a distributed unit (distributed unit, DU). The CU herein completes functions of a radio resource control protocol layer and a packet data convergence protocol (packet data convergence protocol, PDCP) layer of the base station, and may further complete a function of a service data adaptation protocol (service data adaptation protocol, SDAP) layer. The DU completes functions of a radio link control layer and a medium access control (medium access control, MAC) layer of the base station, and may further complete a part or all of functions of a physical layer. For detailed descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

In another possible scenario, a plurality of RAN nodes coordinate to assist a terminal in implementing radio access, and different RAN nodes respectively implement a part of functions of a base station. For example, the RAN node may be a CU, a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented via a software module, a hardware module, or a combination of a software module and a hardware module.

The terminal device is a user-side device having a wireless transceiver function. The terminal device may also be referred to as user equipment (user equipment, UE), a mobile station, a mobile terminal, or the like. The terminal apparatus may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal apparatus may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific apparatus form that are used by the terminal apparatus are not limited in embodiments of this application.

The network device and the terminal device may be fixed at a location, or may be movable. The network device and the terminal device may be deployed on the land, including being deployed indoors or outdoors, and being deployed to be handheld or vehicle-mounted; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, 120i is also a network device relative to 110a. Therefore, the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the smart transportation, and the smart city. The function of the terminal device may alternatively be performed by a module (for example, a chip or a modem) in the terminal device, or may be performed by an apparatus including the function of the terminal device.

A coverage capability is one of key indicators of the network device. With continuous development of communication technologies, people have higher expectations for coverage and quality of a communication network. The coverage of the network is one of important indicators for evaluating a coverage capability of the network. The coverage refers to a geographical area that can be covered by network signals. When evaluating the coverage of the network, factors such as signal propagation attenuation, building blocking, and terrain effects need to be considered. Better network coverage means a wider signal coverage region, so that a user can enjoy a high-speed network connection in a wider geographical region.

In addition to the coverage, coverage density is also one of important indicators for evaluating the coverage capability of the network. The coverage density refers to a quantity of base stations per unit area. Higher coverage density means a shorter distance between network devices, and the terminal device can obtain stronger signal coverage and a faster network connection speed. Therefore, the coverage density is an important indicator for evaluating the coverage capability of the network in high-density regions such as cities.

Signal strength is one of important indicators for measuring network coverage quality. The signal strength refers to strength of network signals, usually measured in decibel (dB). Better signal strength means that the user can obtain a more stable and faster network connection.

The terminal device needs to obtain uplink synchronization through random access, and access a network for communication. The random access includes contention-based random access and non-contention-based random access. The non-contention-based access is usually performed when the terminal device can successfully receive radio resource control (radio resource control, RRC) signaling. The following describes a random access procedure by using a contention-based random access procedure as an example. In the following, an example in which the network device is a base station and the terminal device is a terminal is used for description.

FIG. 2 is an example flowchart of random access. The following operations may be included.

S201: A base station sends configuration information of message 1 (message 1, Msg1) repetition (repetition) to a terminal.

The configuration information may include a configuration of the Msg1 repetition, including a repetition quantity, a time domain resource, a preamble (preamble), and the like. The preamble in this specification may also be referred to as a preamble code, a preamble sequence, or the like.

A correspondence between a synchronization signal block (synchronization signal and physical broadcast channel block, SSB) and a random access occasion (random access channel occasion, RO) is preconfigured by a base station. The RO may be understood as a time-frequency resource for the Msg1 repetition.

S202: The terminal sends the message 1 (Msg1) repetition to the base station.

The terminal may send the Msg1 repetition to the base station on a physical random access channel (physical random access channel, PRACH). The Msg1 repetition may carry the preamble. The terminal may receive a plurality of SSBs from the base station. The terminal may detect power of the plurality of SSBs, and select an SSB with highest power from the plurality of SSBs. The terminal may randomly select an RO from ROs associated with the SSB with highest power, to send the preamble. The terminal may send the Msg1 repetition, and a quantity of repetitive transmissions may be the repetition quantity included in the configuration information.

In an example, a maximum of 64 preambles can be transmitted simultaneously on one RO. The terminal may select one preamble from the 64 preambles, that is, the preamble carried in the Msg1 repetition.

S203: The base station sends a message 2 (Msg2) to the terminal.

The Msg2 is also referred to as random access response (random access response, RAR) information. The terminal may receive, based on a radio access network temporary identifier (radio access network temporary identifier, RA-RNTI), the Msg2 scrambled by using the RA-RNTI. The RAR information may indicate RAR uplink scheduling (RAR UL grant) information, a temporary C-RNTI, and timing advance information.

The RA-RNTI is calculated as follows: $RA - RNTI = 1 + s_id + 14 \times t_id + 14 \times 80 \times f_id + 14 \times 80 \times 8 \times ul_carrier_id$

s_id (0≤s_id<14) is an index of a 1^{st} orthogonal frequency division multiplexing (orthogonal frequency division multiplexing, OFDM) symbol of a PRACH RO. t_id (0≤t_id<80) is an index of a 1^{st} slot of the PRACH RO in a system frame. A subcarrier spacing of t_id is determined based on a value of µ specified in clause 5.3.2 of TS 38.211, µ={0, 1, 2, 3}, and µ={5, 6}. t_id (0≤t_id<80) is an index of a slot of 120 kHz in a system frame including the PRACH RO. f_id (0≤f_id<8) is an index of the PRACH RO in frequency domain. ul_carrier_id is a UL carrier used for random access preamble transmission (0 represents a normal carrier NUL, and 1 represents a supplementary carrier SUL).

In a non-contention-based random access procedure, the terminal may send uplink data based on the RAR uplink scheduling information. In a contention-based random access procedure, the terminal may send a Msg3 based on the RAR uplink scheduling information, and the RAR uplink scheduling information may indicate a time domain resource of the Msg3.

S204: The terminal sends the message 3 (Msg3) to the base station.

The terminal may send the Msg3 to the base station on a physical uplink shared channel (physical uplink shared channel, PUSCH). The terminal may send the Msg3 on a time domain resource indicated by the Msg2. The Msg3 may include uplink control information, for example, a common control channel (common control channel, CCCH) message or a cell-radio network temporary identifier (cell-radio network temporary identifier, C-RNTI).

S205: The base station sends a message 4 (Msg4) to the terminal.

The Msg4 is mainly used for conflict resolution. When a plurality of terminals perform access simultaneously, a specific terminal to be selected for access in current random access needs to be determined. For example, the Msg4 may include a terminal identifier, to indicate that a terminal corresponding to the terminal identifier successfully performs random access.

It can be learned from the procedure shown in FIG. 2 that, regardless of contention-based random access or non-contention-based random access, the terminal sends the Msg1 by using a single beam. Consequently, a random access delay is high, and the terminal may fail to reliably access the base station. For example, if a coverage capability of the base station is poor, when the terminal sends the Msg1 by using a single beam, the base station may not accurately receive the Msg1. Consequently, the terminal device transmits the Msg1 a plurality of times, a random access delay of the terminal is increased, and the terminal may fail to reliably access the base station.

In view of this, embodiments of this application provide a random access method. In the method, a base station may send, to a terminal, configuration information of Msg1 repetition corresponding to a plurality of beams, and the terminal may send the Msg1 repetition by using the plurality of beams. Based on this solution, the terminal sends the Msg1 repetition by using the plurality of beams, so that uplink coverage can be improved, and random access reliability can be improved.

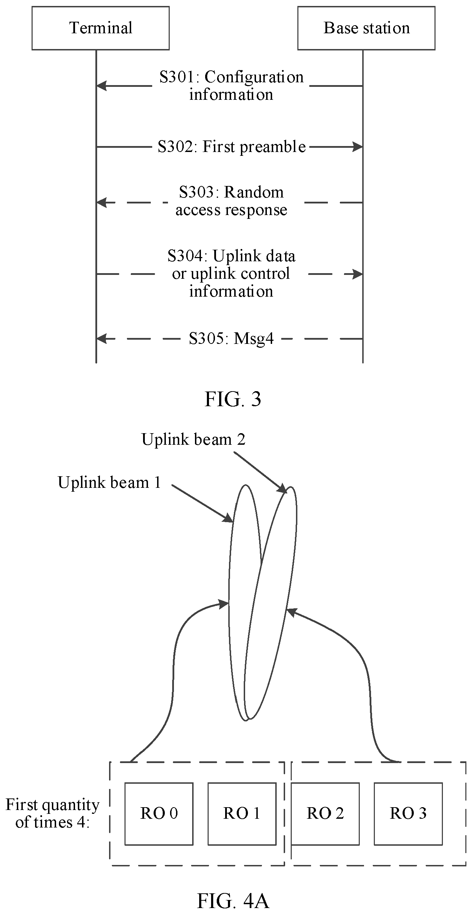

FIG. 3 is an example flowchart of a random access method according to an embodiment of this application. The following operations may be included.

S301: A base station sends configuration information to a terminal.

Correspondingly, the terminal receives the configuration information from the base station.

The configuration information may indicate a first quantity of times and a first random access resource, and the first random access resource corresponds to the first quantity of times. In this specification, the first quantity of times may be an integer greater than 1, for example, may be 2, 3, 4, 8, 16, or a larger integer. For example, the configuration information may include indication information A1 and indication information A2, where the indication information A1 indicates the first quantity of times, and the indication information A2 indicates the first random access resource. Optionally, the first quantity of times may also be referred to as a repetition quantity or a quantity of transmissions of a Msg1 or Msg1 repetition.

In a possible example, the first random access resource includes a time domain resource of a preamble and/or a random access preamble. For example, the configuration information further includes indication information B1, where the indication information B1 indicates the time domain resource of the preamble corresponding to the first quantity of times. For example, the indication information B1 indicates an index of an RO (for example, a mask index), or an index of one or more RO sets (sets), and the terminal may determine the time domain resource of the preamble based on the index of the RO. For another example, the configuration information further includes indication information D1, where the indication information D1 indicates an identifier of a root sequence or the preamble of the random access. The terminal may determine the time-frequency resource of the preamble based on the indication information B1, and determine, based on the indication information D1, the preamble used for the random access, for example, a first preamble. The terminal may repeatedly send the first preamble on the time-frequency resource of the preamble based on N beams, and a quantity of repetitive transmissions of the first preamble is the first quantity of times. In a possible example, a time domain resource (for example, an RO) used for sending the Msg1 repetition once may be contiguous or non-contiguous in time domain, but a frequency domain resource is the same.

Optionally, the configuration information may be carried in a radio resource control (radio resource control, RRC) message, a media access control (media access control, MAC) control element (control element, CE), or downlink control information (downlink control information, DCI), or the configuration information is an RRC message, a MAC CE, or DCI. Optionally, the configuration information may be sent on a physical downlink shared channel (physical downlink shared channel, PDSCH). It should be noted that the configuration information may be used for contention-based random access, or may be used for non-contention-based random access. This is not specifically limited in this application.

In this embodiment of this application, both the first quantity of times (M) and the first random access resource correspond to the N beams. M and N are integers greater than 1, and M and N may be the same or may be different. For example, M is 2, 4, 8, 16, or a larger integer. Similarly, N is 2, 4, 8, or a larger integer. In other words, the first quantity of times and the first random access resource are used for multi-beam random access. The terminal performs multi-beam random access based on the first quantity of times and the first random access resource. Each of the N beams is an uplink beam or a spatial filter (spatial filter). In this application, the beam may be replaced with the spatial filter, and a signal in a specific direction may be generated by using the spatial filter.

In a current random access procedure, a preamble is repeatedly sent on a plurality of time domain resources based on a same beam. In this embodiment of this application, for the multi-beam random access, the terminal may send, on a plurality of beams, a preamble (for example, the first preamble) indicated by the configuration information. For example, the terminal repeatedly sends the preamble on the plurality of beams. Specifically, the terminal may repeatedly send the preamble on each of the plurality of beams, or may send the preamble on each of the plurality of beams in an unrepeated manner. However, the preamble is still repeatedly sent for the plurality of beams.

In a possible implementation, the preamble may be repeatedly sent on each beam in the multi-beam random access, and a quantity of repetitive transmissions of the preamble on each beam is the same. For example, the configuration information indicates a second quantity of times (M1). The second quantity of times may be an integer greater than or equal to 1, for example, may be 1, 2, 4, 8, 16, or a larger integer. M1 is less than or equal to M. For example, the configuration information includes indication information C1, where the indication information C1 indicates the second quantity of times (M1), and the second quantity of times indicates a quantity of repetitive transmissions of the preamble on each uplink beam in the multi-beam random access. In other words, the second quantity of times (M1) is a quantity of repetitive transmissions of the preamble on each of the N beams in one random access attempt. A quantity of times that the terminal sends the preamble on each beam is the second quantity of times. It should be noted that the multi-beam random access means that the terminal sends a message 1 (Msg1) by using the plurality of beams before a message 2. For example, the terminal repeatedly sends the message 1 by using the plurality of beams. Specifically, the terminal may repeatedly send the message 1 on each of the plurality of beams, or may not repeatedly send the message 1 on each of the plurality of beams. However, the message 1 is still repeatedly sent for the plurality of beams. The message 1 may carry the preamble, or the message 1 may be the preamble.

Optionally, a value of N may be directly indicated by the base station or determined based on the first quantity of times and the second quantity of times. For example, N=the first quantity of times M/the second quantity of times M1. For example, if the first quantity of times M is 4, and the second quantity of times M1 is 2, the terminal may determine that N=the first quantity of times/the second quantity of times, that is, N=2. In other words, the terminal may send the preamble based on two beams, and a quantity of transmissions of the preamble on each beam is 2. For example, if the first quantity of times M is 2, and the second quantity of times M1 is 1, the terminal may determine that N=the first quantity of times/the second quantity of times, that is, N=2. In other words, the terminal may send the preamble based on two beams, and a quantity of transmissions of the preamble on each beam is 1. If the first quantity of times M/the second quantity of times M1 is not an integer, the result is rounded up to obtain N. For example, if 5 (M)/2 (M1)=2.5, N=3.

In another possible implementation, a quantity of repetitive transmissions is different on each beam in the multi-beam random access. For example, the configuration information may indicate K third quantities of times. The K third quantities of times are in one-to-one correspondence with N1 beams. K=N1, and N1 is greater than or equal to N. Each third quantity of times may be a quantity of transmissions of the preamble on a corresponding beam. It should be noted that at least two of the K third quantities of times are different, or the K third quantities of times are all different. For example, the configuration information may indicate a third quantity of times 1 to a third quantity of times K. Each of the third quantity of times 1 to the third quantity of times K is different, or at least two of the third quantity of times 1 to the third quantity of times K are different. For example, the configuration information indicates a third quantity of times 1, a third quantity of times 2, and a third quantity of times 3. The third quantity of times 1, the third quantity of times 2, and the third quantity of times 3 may be all different, or the third quantity of times 1 and the third quantity of times 2 are the same but different from the third quantity of times 3, or the third quantity of times 1 and the third quantity of times 3 are the same but different from the third quantity of times 2, or the third quantity of times 2 and the third quantity of times 3 are the same but different from the third quantity of times 1.

The terminal may determine, from the N1 beams, the N beams used for sending the preamble, and determine, based on the configuration information, a third quantity of times corresponding to each beam. The terminal sends, by using the N beams, the preamble indicated by the configuration information, for example, the first preamble. A quantity of transmissions of the first preamble on each beam meets a corresponding third quantity of times. For example, the terminal determines to send the preamble by using an uplink beam 1 and an uplink beam 2. The terminal determines, based on the configuration information, that a third quantity of times 1 corresponding to the uplink beam 1 is 2 and a third quantity of times 2 corresponding to the uplink beam 2 is 4, and the configuration information indicates that the terminal sends the first preamble. In this case, a quantity of times that the terminal sends the first preamble on the uplink beam 1 is 2, and a quantity of times that the terminal sends the first preamble on the uplink beam 2 is 4.

In this embodiment of this application, the N beams (for example, a beam 0 to a beam N-1) used by the terminal to repeatedly send the preamble may be determined by the terminal. For example, the terminal may select one SSB from a plurality of SSBs of the base station. Receive power of the SSB is higher than a threshold. The first random access resource corresponds to the SSB, and also corresponds to the N beams (for example, the beam 0 to the beam N-1).

In a possible implementation, the configuration information may indicate P first quantities of times, and the P first quantities of times are all different, or a part of the P first quantities of times are the same and a part of the P first quantities of times are different. For example, the configuration information may indicate a first quantity of times 1 to a first quantity of times P, and each of the first quantity of times 1 to the first quantity of times is different, or a part of the first quantity of times 1 to the first quantity of times P, for example, the first quantity of times 1 to the first quantity of times P-1, are the same, and are different from the first quantity of times P. The configuration information further indicates P random access resources and P second quantities of times that are in one-to-one correspondence with the P first quantities of times. The P random access resources are different, the P second quantities of times may be the same or different, and P is an integer greater than 1. For example, the configuration information includes the indication information A1, the indication information B1, and the indication information C1. Optionally, the configuration information further includes the indication information D1. The indication information A1 indicates that the first quantity of times is 4, the indication information B1 indicates a random access resource 1, and the indication information C1 indicates that the second quantity of times is 2. The random access resource 1 includes a plurality of random resources. The configuration information further includes the indication information A2, indication information B2, and indication information C2. The indication information A2 indicates a quantity of times different from that indicated by the indication information A1. For example, the indication information A2 indicates that the first quantity of times is 8, the indication information B1 indicates a random access resource 2, and the indication information C1 indicates that the second quantity of times is 4. The terminal may determine a quantity of repetitive transmissions of the preamble on the N beams, that is, the first quantity of times, to determine the corresponding random access resource and the quantity of transmissions of the preamble on each beam.

S302: The terminal sends the first preamble.

Correspondingly, the base station receives the first preamble.

In a possible implementation, in S302, the terminal sends the Msg1 repetition on the time-frequency resource of the preamble based on the configuration information by using the plurality of beams (the N beams, for example, the beam 0 to the beam N-1).

For example, the time-frequency resource of the first preamble includes L ROs (an RO 0 to an RO L-1), and the L ROs form N RO subsets, for example, an RO subset 0 to an RO subset N-1. The beam 0 to the beam N-1 are in one-to-one correspondence with the RO subset 0 to the RO subset N-1, and one RO subset is used for repeatedly sending the first preamble on one beam. L is an integer greater than 1.

The Msg1 repetition may be understood as repetitive transmission of the Msg1. It may be understood that the quantity of times that the terminal repeatedly sends the first preamble on the N beams may be the first quantity of times (M), and the quantity of times that the terminal repeatedly sends the first preamble on each beam may be the second quantity of times. In other words, quantities of times that the terminal repeatedly sends the first preamble on the beam 0 to the beam N-1 are all the second quantity of times. The first quantity of times is equal to the second quantity of times multiplied by N.

In this embodiment of this application, that the first quantity of times and the first random access resource correspond to the N beams may be understood as that the first quantity of times and the first random access resource correspond to a plurality of beams instead of a single beam. The terminal may perform random access by using the plurality of beams based on the first quantity of times and the first random access resource. In this application, sending a preamble by using a plurality of beams may be referred to as first-type random access or multi-beam random access, and sending a preamble by using a single beam, for example, the manner of sending the preamble in S201, is referred to as second-type random access or single-beam random access.

The following describes the multi-beam random access with reference to the accompanying drawings. Refer to FIG. 4A. It is assumed that the configuration information indicates that the first quantity of times is 4, and the random access resource (an RO set) corresponding to the first quantity of times includes an RO 0 to an RO 3. The configuration information further indicates that the second quantity of times is 2, that is, a quantity of transmissions of the preamble on each beam in the RO set (set) is 2. Based on the second quantity of times, it may be determined that one RO set may be divided into two RO subsets (subsets), and two uplink beams need to be used for sending the preamble. The RO 0 and the RO 1 belong to an RO subset 1, and the RO 2 and the RO 3 belong to an RO subset 2. The RO subset 1 may correspond to an uplink beam 1, and the RO subset 2 may correspond to an uplink beam 2. In other words, the preamble is sent on the RO subset 1 by using the uplink beam 1, and the preamble is sent on the RO subset 2 by using the uplink beam 2. After sending the preamble twice on the uplink beam 1, the terminal switches the uplink beam, and sends the preamble twice on the uplink beam 2. It should be noted that the preamble sent on the RO subset 1 and the preamble sent on the RO subset 2 are the same, that is, the same preamble. The terminal sends the preamble on the RO subset 1 and the RO subset 2 until a quantity of times indicated by the first quantity of times is reached.

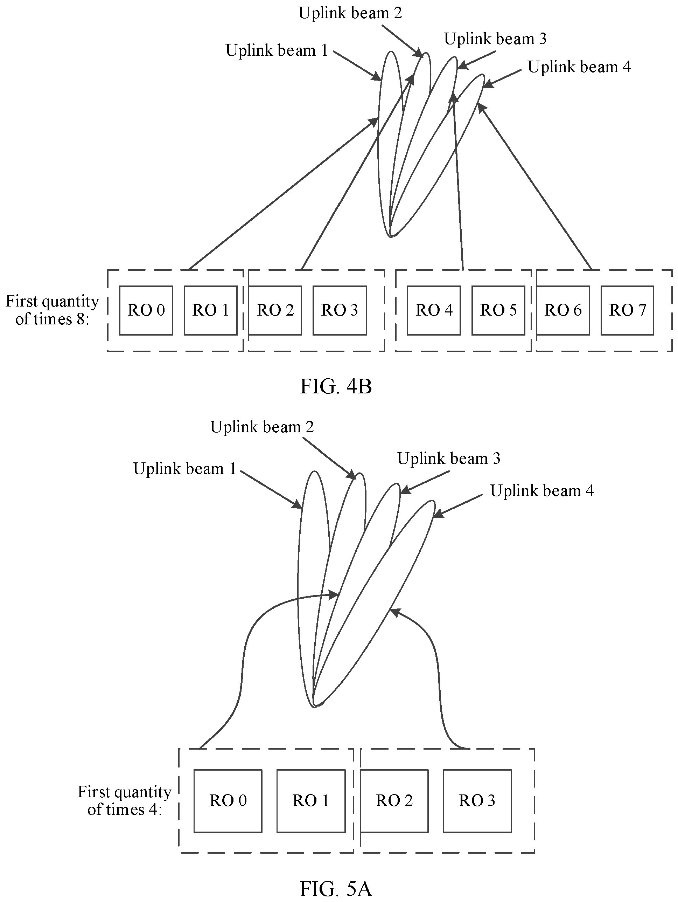

Refer to FIG. 4B. It is assumed that the configuration information indicates that the first quantity of times is 8, and the random access resource (an RO set) corresponding to the first quantity of times includes an RO 0 to an RO 7. The configuration information further indicates that the second quantity of times is 2, that is, a quantity of transmissions of the preamble on each beam in the RO set is 2. Based on the second quantity of times, it may be determined that one RO set may be divided into four RO subsets (subsets), and four uplink beams need to be used for sending the preamble. The RO 0 and the RO 1 belong to an RO subset 1, the RO 2 and the RO 3 belong to an RO subset 2, the RO 4 and the RO 5 belong to an RO subset 3, and the RO 6 and the RO 7 belong to an RO subset 4. The RO subset 1 may correspond to an uplink beam 1, the RO subset 2 may correspond to an uplink beam 2, the RO subset 3 may correspond to an uplink beam 3, and the RO subset 4 may correspond to an uplink beam 4. In other words, the preamble is sent on the RO subset 1 by using the uplink beam 1, the preamble is sent on the RO subset 2 by using the uplink beam 2, the preamble is sent on the RO subset 3 by using the uplink beam 3, and the preamble is sent on the RO subset 4 by using the uplink beam 4. After sending the preamble twice on the uplink beam 1, the terminal switches the uplink beam; after sending the preamble twice on the uplink beam 2, the terminal switches the uplink beam; and after sending the preamble twice on the uplink beam 3, the terminal switches the uplink beam, and sends the preamble twice on the uplink beam 4. It should be noted that the preamble sent on the RO subset 1, the preamble sent on the RO subset 2, the preamble sent on the RO subset 3, and the preamble sent on the RO subset 4 of the terminal are the same, that is, the same preamble. The terminal sends the preamble on the RO subset 1, the RO subset 2, the RO subset 3, and the RO subset 4 until a quantity of times indicated by the first quantity of times is reached.

It can be learned from the foregoing content that the terminal may send the preamble based on a plurality of beams, thereby improving uplink coverage.

It should be noted that an example in which the ROs in FIG. 4A and FIG. 4B are numbered starting from 0 is used for description. In a communication system, ROs may alternatively be numbered starting from 1. This is not specifically limited in this application. In addition, one RO subset may also correspond to one index, and an index of each RO subset may be determined by the terminal. For example, the terminal may determine, based on the second quantity of times and the first quantity of times, a quantity of RO subsets into which the RO set may be divided, or determine a value of N. Assuming that the RO set includes an RO 0 to an RO 7, the second quantity of times is 2, and the first quantity of times is 8, the terminal may determine that N=the second quantity of times/the first quantity of times, that is, N=4. In other words, the terminal may determine that the RO set is divided into four RO subsets. The terminal may number the RO subsets starting from 0 or 1. In this embodiment of this application, an example in which the RO subsets are numbered starting from 1 is used for description. The terminal may determine that the RO set includes an RO subset 1, an RO subset 2, an RO subset 3, and an RO subset 4 respectively, where the RO 0 and the RO 1 belong to the RO subset 1, the RO 2 and the RO 3 belong to the RO subset 2, the RO 4 and the RO 5 belong to the RO subset 3, and the RO 6 and the RO 7 belong to the RO subset 4.

In a possible case, the configuration information may further indicate a trigger event of the multi-beam random access. For example, the configuration information may include indication information D. The indication information D may indicate the trigger event of the multi-beam random access. The trigger event may include one or more of the following:

### Event 1: Beam failure recovery

The terminal may perform multi-beam random access when the event 1 is met. For example, when the terminal intends to perform beam failure recovery, the terminal may perform multi-beam random access to perform recovery.

### Event 2: Radio connection establishment

The terminal may perform multi-beam random access when the event 2 is met. For example, when the terminal intends to perform radio connection establishment, for example, RRC connection establishment, the terminal may perform multi-beam random access.

### Event 3: Radio connection resume

The terminal may perform multi-beam random access when the event 3 is met. For example, when the terminal intends to perform radio connection resume or radio connection re-establishment, for example, RRC resume or RRC re-establishment, the terminal may perform multi-beam random access.

### Event 4: Uplink timing synchronization

Uplink timing synchronization may mean that uplink signals of different terminals can arrive at a base station synchronously (or simultaneously). The terminal may perform multi-beam random access when the event 4 is met. For example, when the terminal intends to perform uplink synchronization, the terminal may obtain timing advance (timing advance, TA) information through the multi-beam random access. Different terminal devices need to obtain respective timing advances, and then use the respective timing advances to perform uplink transmission.

### Event 5: Cell handover

Cell handover (cell switch or handover) means that in a wireless communication system, when a terminal moves from one cell to another cell, to maintain communication continuity, the terminal may perform multi-beam random access when the event 5 is met. For example, when the terminal intends to perform cell handover, the terminal may perform multi-beam random access to hand over to a target cell.

The configuration information may indicate one or more of the foregoing event 1 to event 5. The terminal may perform multi-beam random access when any one of the event 1 to the event 5 is fulfilled. In other words, when any one of the foregoing event 1 to event 5 is fulfilled, the terminal may trigger random access of Msg1 repetition over a plurality of beams, determine a quantity of the Msg1 repetitions over the plurality of beams (for example, a repetition quantity M), select a resource corresponding to the Msg1 repetition over the plurality of beams (the repetition quantity M), and repeatedly send the Msg1 by using the plurality of beams based on the configuration information.

Optionally, the embodiment shown in FIG. 3 may further include S303 to S305.

S303: The base station sends, to the terminal, a random access response for the first preamble.

Correspondingly, the terminal receives, from the base station, the random access response for the first preamble.

In a possible implementation, the terminal receives the random access response for the first preamble (refer to S302) based on a radio access network temporary identifier (radio access network temporary identifier, RA-RNTI). The RA-RNTI is determined based on a part of resources in the first random access resource, for example, a last valid RO (for example, an RO L-1) in the time-frequency resource of the preamble. The random access response for the first preamble may include identification information of the random access resource, for example, an index of a first RO subset or an index of a first RO. The identification information of the random access resource indicates that a transmit beam of uplink data or uplink control information (refer to S304) is the same as a transmit beam of the first preamble on the first RO subset (refer to S302). Indexes of different RO subsets correspond to different uplink beams. Different RO subsets correspond to a same RA-RNTI.

The first RO corresponds to the first RO subset. For example, the N RO subsets in S302 include the first RO subset. It is assumed that the first RO subset is an RO subset n, and the first RO subset includes the first RO. For example, the first RO is an RO (for example, a 1^{st} RO) in the first RO subset. The random access response in S303 includes the index of the first RO subset. The index of the first RO subset indicates an uplink beam for sending the uplink data or the uplink control information. The uplink beam may be the same as the uplink beam for sending the first preamble. The terminal may determine a corresponding uplink beam based on an index of an RO subset.

In another possible implementation, the terminal monitors the random access response for the first preamble (refer to S302) based on N radio access network temporary identifiers (radio access network temporary identifiers, RA-RNTIs). The N radio access network temporary identifiers (RA-RNTIs 0 to N-1) are in one-to-one correspondence with the N RO subsets. An RA-RNTI i (0=<i<N) is determined based on an i^{th} RO subset in the N RO subsets, for example, determined based on a last RO of the i^{th} RO subset. The network device sends, to the terminal, the random access response for the first preamble by using one of the N RA-RNTIs (for example, a first RA-RNTI). The first RA-RNTI corresponds to the first RO subset in the first random access resource. When the terminal receives the random access response for the first preamble by using an RA-RNTI (that is, the first RA-RNTI) corresponding to the first RO subset, the terminal determines that the transmit beam of the uplink data or the uplink control information (refer to S304) is the same as the transmit beam of the first preamble on the first RO subset (refer to S302).

FIG. 4A is used as an example. The terminal sends the preamble on the RO subset 1 by using the uplink beam 1, and sends the preamble on the RO subset 2 by using the uplink beam 2. It is assumed that an index 1 of the RO subset corresponds to the uplink beam 1, and an index 0 of the RO subset corresponds to the uplink beam 2. In S303, if the random access resource response received by the terminal includes the index 1 of the RO subset, the terminal may determine the uplink beam 1, and send the uplink data or the uplink control information by using the uplink beam 1, as shown in the following step S304.

The random access response may further indicate a PUSCH resource, for example, a PUSCH resource of a message 3.

S304: The terminal sends the uplink data or the uplink control information to the base station.

Correspondingly, the base station receives the uplink data or the uplink control information from the terminal.

Based on S303, the terminal sends the uplink data or the uplink control information to the base station by using a beam the same as the transmit beam that is of the first preamble and that is on the first RO subset (refer to S302).

In S304, for the non-contention-based random access, the terminal may send the uplink data on an uplink beam corresponding to an identifier of the random access resource included in the random access response. For the contention-based random access, the terminal may send the Msg3 on the uplink beam corresponding to the identifier of the random access resource included in the random access response. The Msg3 may include the uplink control information, for example, a CCCH message (for example, an RRC resume request message, an RRC establishment request message, or an RRC re-establishment request message) or a C-RNTI of the terminal. The C-RNTI may uniquely identify the terminal in a cell. For example, the transmit beam of the uplink data or the uplink control information is the same as the transmit beam of the first preamble corresponding to the RO subset n.

It may be understood that the Msg3 may alternatively be repeatedly sent. For details, refer to repetitive transmission of the first preamble. This is not specifically limited in this application.

S305: The base station sends a Msg4 to the terminal.

Correspondingly, the terminal receives the Msg4 from the base station.

The Msg4 is mainly used for conflict resolution. When a plurality of terminals perform access simultaneously, a specific terminal to be selected for successful access in current random access needs to be determined. For example, the Msg4 may include a terminal identifier (for example, the C-RNTI) or all or a part of content of the CCCH message, to indicate that a terminal corresponding to the terminal identifier or the CCCH message successfully performs random access.

It may be understood that, after the terminal sends the preamble by using the plurality of beams, if the terminal does not receive the random access response or the Msg4, the terminal may perform preamble retransmission by using other N beams (a beam N to a beam 2*N-1). For a specific procedure, refer to S301. A difference lies in that a time domain resource indicated by a resource for preamble retransmission is the same as or different from the time domain resource indicated by the first random access resource, and the time domain resource indicated by the resource for preamble retransmission also includes N RO subsets. The terminal repeatedly sends, based on the time domain resource indicated by the resource for preamble retransmission, a second preamble indicated by the time domain resource indicated by the resource for preamble retransmission, which is the same as or different from the first preamble sent in S301. In other words, the terminal may send the preamble by using a plurality of beams other than the N beams (the beam 0 to the beam N-1). In other words, the terminal may send the preamble in another direction, to improve random access reliability.

Refer to FIG. 5A. It is assumed that the terminal sends the first preamble in the manner shown in FIG. 4A. If the terminal does not receive the random access response or the Msg4, the terminal may send the second preamble by using another beam, for example, an uplink beam 3 and an uplink beam 4. It may be understood that the first preamble and the second preamble may be the same or may be different. This is not specifically limited in this application. Similarly, it is assumed that the configuration information indicates that the first quantity of times is 4, and a quantity of random access resources (an RO set) corresponding to the first quantity of times is 4, including an RO 0 to an RO 3. The configuration information further indicates that the second quantity of times is 2, that is, the quantity of transmissions on each beam is 2. Therefore, in an RO set, the RO 0 and the RO 1 belong to an RO subset 1, and the RO 2 and the RO 3 belong to an RO subset 2. In this case, the terminal may send the second preamble on the RO subset 1 by using the uplink beam 3, and send the second preamble on the RO subset 2 by using the uplink beam 4.

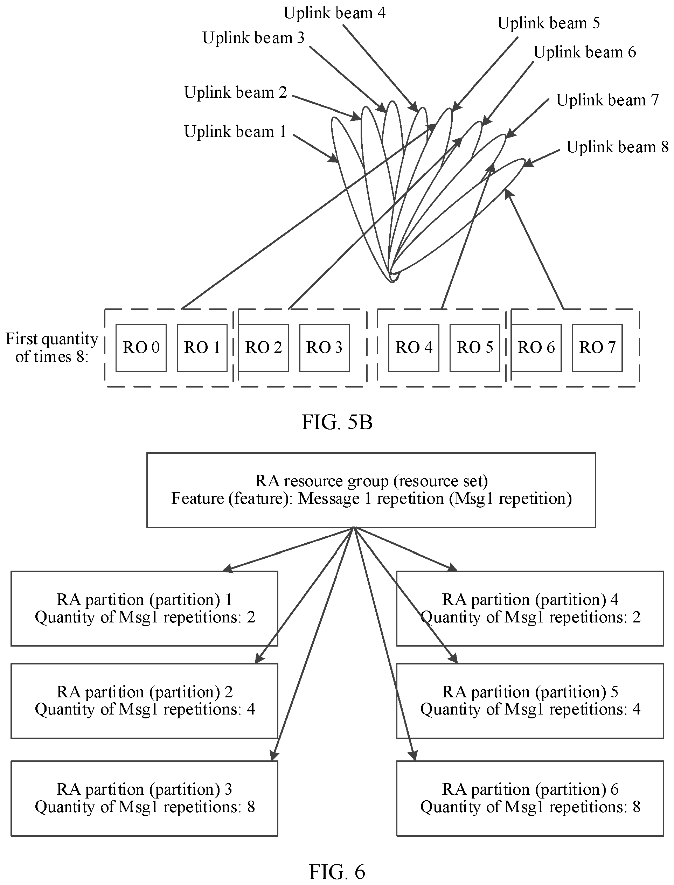

Refer to FIG. 5B. It is assumed that the terminal sends the first preamble in the manner shown in FIG. 4B. If the terminal does not receive the random access response or the Msg4, the terminal may send the second preamble by using another beam, for example, an uplink beam 5 to an uplink beam 8. It may be understood that the first preamble and the second preamble may be the same or may be different. This is not specifically limited in this application. Similarly, it is assumed that the configuration information indicates that the first quantity of times is 8, and a quantity of random access resources (an RO set) corresponding to the first quantity of times is 8, including an RO 0 to an RO 7. The configuration information further indicates that the second quantity of times is 2, that is, the quantity of transmissions on each beam is 2. Therefore, in an RO set, the RO 0 and the RO 1 belong to an RO subset 1, the RO 2 and the RO 3 belong to an RO subset 2, the RO 4 and the RO 5 belong to an RO subset 3, and the RO 6 and the RO 7 belong to an RO subset 4. In this case, the terminal may send the second preamble on the RO subset 1 by using the uplink beam 5, send the second preamble on the RO subset 2 by using the uplink beam 6, send the second preamble on the RO subset 3 by using the uplink beam 7, and send the second preamble on the RO subset 4 by using the uplink beam 8.

Based on the foregoing solution, when the terminal does not receive the random access response, the terminal may send the preamble by using a plurality of beams other than the N beams, to improve random access reliability.

In a possible implementation, a multi-beam random access resource and a single-beam random access resource may correspond to a same feature (feature). For example, the configuration information may further indicate a second random access resource, and the second random access resource corresponds to one beam. In other words, the second random access resource is a single-beam random access resource. The first random access resource and the second random access resource correspond to a feature of the message 1 repetition, and the first random access resource and the second random access resource belong to a same random access resource group, as shown in FIG. 6. In FIG. 6, each random access (random access, RA) partition may include a plurality of ROs, and a quantity of ROs included in each RA partition may be determined based on a quantity of Msg1 repetitions. For example, if a quantity of Msg1 repetitions of an RA partition 1 is 2, the RA partition 1 includes two ROs. For another example, if a quantity of Msg1 repetitions of an RA partition 2 is 4, the RA partition 2 includes four ROs, and so on. The RA partition 1 to an RA partition 3 correspond to a single-beam random access resource, and an RA partition 4 to an RA partition 6 correspond to a multi-beam random access resource. The RA partition 1 to the RA partition 6 correspond to the feature of the message 1 repetition.

In a possible example, the single-beam random access resource and the multi-beam random access resource correspond to a same priority, and the priority may be used to select a random access resource group of the feature of the message 1 repetition. For example, the base station may send, to the terminal in a system message, the priority corresponding to the feature of the message 1 repetition. It is assumed that the terminal needs to send the message 1 repetition and perform small data transmission (small data transport, SDT). The priority corresponding to the feature of the message 1 repetition is higher than a priority corresponding to an SDT feature. In this case, the terminal may select a high-priority feature, that is, select the random access resource group corresponding to the feature of the message 1 repetition, but not select a random access resource group corresponding to the SDT feature. In other words, the terminal selects to send the message 1 repetition, but does not select to send the SDT. For example, in the random access resource group shown in FIG. 6, the terminal may send the message 1 repetition. In this case, the terminal preferentially selects, based on the priority, a random access resource corresponding to the message 1 repetition to send the message 1 repetition, and does not select a random access resource corresponding to a low priority to send the SDT, so as to ensure that the terminal successfully accesses the base station. In a possible implementation, whether the terminal performs single-beam random access or multi-beam random access may be determined based on the trigger event. If one or more of the foregoing event 1 to event 5 are met, the terminal performs multi-beam random access; or if none of the foregoing event 1 to event 5 is fulfilled, the terminal performs single-beam random access.

Based on the foregoing solution, a random access resource of the message 1 repetition of a single beam and a random access resource of the message 1 repetition of a plurality of beams correspond to a same group and a same feature priority, thereby reducing resource overheads and reducing complexity of the terminal.

In this embodiment of this application, a fallback (fallback) or switching may be further performed between the multi-beam random access and the single-beam random access. In an example, the configuration information may indicate a first maximum quantity of transmissions. The first maximum quantity of transmissions is used to control a fallback from the multi-beam random access to the single-beam random access. The first maximum quantity of transmissions is a maximum quantity of transmissions of a preamble of the multi-beam random access.

For example, in S302, the terminal performs multi-beam random access, and sends the first preamble by using the N beams. If the terminal does not receive the random access response for the first preamble or the Msg4, it may be considered that one time of preamble transmission of the multi-beam random access fails. The terminal may perform preamble retransmission of the multi-beam random access, for example, repeatedly send the second preamble. If the terminal does not receive a random access response for the second preamble or the Msg4, it may be considered that one time of preamble transmission of the multi-beam random access fails. In this case, it is considered that a quantity of accumulated preamble transmission failures of the multi-beam random access is two. If the quantity of accumulated preamble transmission failures of the multi-beam random access is greater than or equal to the first maximum quantity of transmissions, the terminal may perform a first fallback. In other words, the terminal may fall back from the multi-beam random access to the single-beam random access, to perform single-beam random access. For example, S201 is performed, and the terminal may select a random access resource (repeated or non-repeated sending) corresponding to the single-beam random access to send a preamble of the single-beam random access.

In another example, the configuration information may indicate a second maximum quantity of transmissions. The second maximum quantity of transmissions is used to control a fallback from the single-beam random access to the multi-beam random access. The second maximum quantity of transmissions is a maximum quantity of transmissions of the preamble of the single-beam random access. It may be understood that the second maximum quantity of transmissions may be the same as or different from the first maximum quantity of transmissions. This is not specifically limited in this application.

For example, before S302, the terminal performs single-beam random access, and sends a preamble by using a single beam (repeated or non-repeated sending), for example, S201 is performed. If the terminal does not receive a random access response for the preamble or the Msg4, it may be considered that one time of preamble transmission of the single-beam random access fails. The terminal may send the preamble of the single-beam random access again. If the terminal does not receive the random access response for the preamble or the Msg4, it may be considered that one time of preamble transmission of the single-beam random access fails. In this case, it is considered that a quantity of accumulated preamble transmission failures of the single-beam random access is two. If the quantity of accumulated preamble transmission failures of the single-beam random access is greater than or equal to the second maximum quantity of transmissions, the terminal may perform a second fallback. In other words, the terminal may fall back from the single-beam random access to the multi-beam random access. For example, the terminal may select the multi-beam random access resource (repeated or non-repeated) to send the preamble of the multi-beam random access, that is, perform S302.

In still another example, the configuration information may further indicate a third maximum quantity of transmissions. The third maximum quantity of transmissions may be used to determine that a random access procedure fails. For example, the third maximum quantity of transmissions is greater than or equal to the first maximum quantity of transmissions, and is greater than or equal to the second maximum quantity of transmissions. For example, if a quantity of accumulated preamble transmission failures of the random access is greater than or equal to the third maximum quantity of transmissions, it may be determined that the random access procedure fails. The quantity of accumulated preamble transmission failures includes the quantity of preamble transmission failures of the single-beam random access and the quantity of preamble transmission failures of the multi-beam random access of the terminal. Optionally, the terminal may perform an RRC re-establishment procedure, and re-establish a connection to the base station by using another cell.

Based on the foregoing solution, a random access fallback can be used to avoid that the terminal performs RRC re-establishment excessively early, which causes service interruption and affects service experience.

Currently, because an internal power apparatus of the terminal cannot continuously ensure maximum transmit power corresponding to a low power class, when the maximum transmit power cannot be continuously ensured, the terminal may temporarily increase the power class, thereby reducing the maximum transmit power of the terminal and temporarily ensuring data transmission. In this case, the base station does not know that the terminal actively increases the power class, and therefore, scheduled resources may exceed the maximum transmit power of the terminal, resulting in a data transmission failure.

Different power classes (power classes, PCs) of the terminal may correspond to different maximum transmit power of the terminal. A lower power class indicates higher maximum transmit power. For example, maximum transmit power that is of the terminal and that is corresponding to a first power class (for example, PC1.5) is 29 dBm, and maximum transmit power that is of the terminal and that is corresponding to a second power class (for example, PC3) is 23 dBm. A correspondence between the power class and the maximum transmit power of the terminal is shown in Table 1. The correspondence may be preconfigured or predefined in a protocol.

**Table 1: Example of the correspondence between the power class and the maximum transmit power**

| Power class (power class) | PC1 | PC1.5 | PC2 | PC3 |
|---|---|---|---|---|
| Maximum transmit power (max output power) (dBm) | 31 | 29 | 26 | 23 |

As shown in Table 1, when the power class is PC1, the maximum transmit power of the terminal is 31 dBm, when the power class is PC1.5, the maximum transmit power of the terminal is 29 dBm, and so on.

In a possible implementation, the terminal triggers a delta power class (delta power class, DPC) when a first condition is met. The first condition may include that the terminal is at the first power class and an uplink duty cycle exceeds a threshold (uplink duty cycle exceedance). That is, in an evaluation periodicity, a proportion of duration of a scheduled uplink transmission symbol in the evaluation periodicity is greater than or equal to the threshold, for example, greater than a percentage threshold. Alternatively, the first condition may include that the terminal falls back from the second power class to the first power class again after an uplink duty cycle of the terminal exceeds a threshold.

For example, it is assumed that the power class of the terminal is the first power class. After the uplink duty cycle of the terminal exceeds the threshold, the terminal falls back to the second power class, and a first maximum transmit power of the second power class is greater than or equal to a first maximum transmit power of the first power class minus a DPC indicated in a first DPC field in a first report. A second maximum transmit power of the second power class is less than or equal to a second maximum transmit power of the first power class minus a DPC indicated in a second DPC field in the first report. The first maximum transmit power of the first power class and the first maximum transmit power of the second power class correspond to a first cell, and the second maximum transmit power of the first power class and the second maximum transmit power of the second power class correspond to a first band combination (Band Combination, BC). The first maximum transmit power of the first power class is greater than the first maximum transmit power of the second power class. The second maximum transmit power of the first power class is greater than the second maximum transmit power of the second power class.

For example, after the uplink duty cycle of the terminal exceeds the threshold, the terminal falls back from the second power class to the first power class again. Because the maximum transmit power of the terminal is recovered, the terminal falls back to the first power class, and the DPC is triggered again.

When the DPC is triggered, the terminal sends the first report, for example, a power headroom report (power headroom report, PHR), to the base station. The first report includes the first DPC field (for example, a DPC field) and the second DPC field (for example, a DPC_BC field).

Information indicated by the first DPC field is shown in Table 2.

**Table 2: Example of the first DPC field. A quantity of bits of the first DPC field is 2, including four code points, which may indicate four different values.**

| First DPC field | Measured DPC value (measured DPC value) |
|---|---|
| First value, for example, 0 | Reserved (reserved) or a DPC reporting condition of the terminal is not met (the criteria to report DPC is not met) |
| Second value, for example, 1 | DPC00, for example, 0 dB |
| Third value, for example, 2 | DPC03, for example, 3 dB |
| Fourth value, for example, 3 | DPC06, for example, 6 dB |

In Table 2, when a value of the first DPC field is the first value, for example, 0, it indicates that the DPC reporting condition of the terminal is not met; when a value of the first DPC field is the second value, for example, 1, it indicates that the delta power class (DPC) is 0 dB, and optionally, further indicates that the DPC reporting condition of the terminal is met; when a value of the first DPC field is the third value, for example, 2, it indicates that the delta power class (DPC) is 3 dB, and optionally, further indicates that the DPC reporting condition of the terminal is met; and when a value of the first DPC field is the fourth value, for example, 3, it indicates that the delta power class (DPC) is 6 dB, and optionally, further indicates that the DPC reporting condition of the terminal is met. The first value, the second value, the third value, and the fourth value are different integers, and the first value<the second value<the third value<the fourth value. In another example, the first DCP field indicates two values, for example, the first value or the second value, that is, there is no value of the third value or the fourth value.

The first report may further include a first DPC field of at least one first cell. Different first cells correspond to respective first DPC fields. A value of the first DPC field of each cell is explained as above. The at least one first cell is a serving cell of the terminal device, for example, a CA serving cell or a DC serving cell.

After receiving the first report, the base station determines, based on the first maximum transmit power of the first power class and the first DPC field (that is, a DPC indicated by a non-first value), a terminal maximum transmit power (for example, the first maximum transmit power of the second power class) corresponding to the current first cell, and determines, based on the second maximum transmit power of the first power class and the second DPC field (that is, an indicated DPC), a terminal maximum transmit power (for example, the second maximum transmit power of the second power class) corresponding to the current first band (band) combination. The first band combination includes a carrier of the first cell. A bandwidth of the first band combination is greater than a bandwidth of the first cell, and may include bandwidths of a plurality of cells. The first cell is a terminal serving cell, and may be a CA serving cell or a DC serving cell. The first report is transmitted by using a medium access control control element (Medium Access Control Control Element, MAC CE). The base station allocates a proper radio resource to the terminal based on the terminal maximum transmit power corresponding to the current first cell or the terminal maximum transmit power corresponding to the current first band (band) combination, where the allocated resource does not exceed the current maximum transmit power of the terminal device.

In a possible implementation, the first DPC field indicates the non-first value (for example, the second value, the third value, or the fourth value). When the first DPC field indicates the non-first value (for example, the second value, the third value, or the fourth value), the second DPC field indicates a DPC corresponding to the first band (band) combination. Specifically, the first DPC field has one bit, including two code points, which may indicate two different values (a fifth value or a sixth value). When the first DPC field indicates the non-first value (for example, the second value, the third value, or the fourth value), and when a value of the second DPC field is the fifth value (for example, 0), the second DPC field indicates that the DPC corresponding to the first band (band) combination is 0 dB; or when a value of the second DPC field is the sixth value (for example, 1), the second DPC field indicates that the DPC corresponding to the first band (band) combination is greater than or equal to 3 dB. The fifth value is different from the sixth value, and both are integers. When the first DPC field indicates the first value, the second DPC field is ignored, regardless of whether the second DPC field indicates 0 or 1, or a bit corresponding to the second DPC field does not indicate the DPC corresponding to the first band (band) combination.

For a possible implementation of a format of the first report, refer to Table 3.

**Table 3**

| C₇ | C₆ | C₅ | C₄ | C₃ | C₂ | C₁ | DPC_{BC} or R |
|---|---|---|---|---|---|---|---|
| P | V | PH (Type 2, SpCell of the other MAC entity) | | | | | |
| MPE or DPC or R | | P_{CMAX,f,c} 1 | | | | | |
| P | V | PH (Type 1, PCell) | | | | | |
| MPE or DPC or R | | P_{CMAX,f,c} 2 | | | | | |
| P | V | PH (Type X, Serving Cell 1) | | | | | |
| MPE or DPC or R | | P_{CMAX,f,c} 3 | | | | | |
| ... | | | | | | | |
| P | V | PH (Type X, Serving Cell n) | | | | | |
| MPE or DPC or R | | P_{CMAX,f,c} m | | | | | |

Explanations of the fields in Table 3 may be shown as follows.

The value of the second DPC field (for example, DPC_{BC} in Table 3) is the fifth value (for example, 1 bit, where the value is 0), and indicates, when the first PDC field is set to the non-first value (for example, the second value, the third value, or the fourth value), that the delta power class of the first band combination is 0 dB. The value of the second DPC field (for example, DPC_{BC} in Table 3) is the sixth value (for example, 1 bit, where the value is 1), and indicates, when the first PDC field is set to the first value (for example, the second value, the third value, or the fourth value), that the delta power class of the first band combination is greater than or equal to 3 dB. When the first PDC field is set to the first value, the second DPC field is ignored. The fifth value is different from the sixth value, and both the fifth value and the sixth value are integers.

Cᵢ: This field indicates that a PH field of a serving cell i (*ServCellIndex* i) specified in TS 38.331 [5] exists. Cᵢ set to 1 indicates that the report includes the PH field of the serving cell i (*ServCellIndex* i). Cᵢ set to 0 indicates that the report does not include the PH field of the serving cell i (*ServCellIndex* i)*.*

DPC_{BC} or R: If dpc-Reporting-FR1 is configured, this field indicates ΔP_{PowerClass,CA}/ΔP_{PowerClass,EN-DC}/ΔP_{PowerClass,NR-DC} as specified in TS 38.101-1 [14] and TS 38.101-3 [16]. This field set to 0 indicates that if the DPC field is not set to 0, the delta power class of the band combination is 0 dB. This field set to 1 indicates that if the DPC field is not set to 0, the power class of the band combination is the same as or greater than 3 dB. If the DPC field is set to 0, this field is ignored. Alternatively, the field set to 0 serves as a reserved bit.

V: This field indicates whether the PH value is based on real transmission or a reference format. For type 1 PH, the V field set to 0 indicates real transmission on a physical uplink shared channel (physical uplink shared channel, PUSCH), and the V field set to 1 indicates that a PUSCH reference format is used. For type 2 PH, the V field set to 0 indicates real transmission on a physical uplink control channel (physical uplink control channel, PUCCH), and the V field set to 1 indicates that a PUCCH reference format is used. For type 3 PH, the V field set to 0 indicates real transmission on an uplink reference signal (sounding reference signal, SRS), and the V field set to 1 indicates that an SRS reference format is used. Further, for the type 1 PH, the type 2 PH, and the type 3 PH, the V field set to 0 indicates that an associated P_{CMAX,f,c} field exists, while the V field set to 1 indicates that an octet of an associated P_{CMAX,f,c}, MPE, or DPC field is omitted.

Power Headroom (PH): This field indicates a power headroom level. A length of this field is 6 bits. Reported PH and a corresponding power headroom level are shown in a corresponding measured value (in dB) for an NR serving cell as specified in TS 38.133 [11] or a corresponding measured value (in dB) for an E-UTRA serving cell as specified in TS 36.133 [12].

P: If *mpe-Reporting-FR2* is configured and the serving cell operates on FR2, a media access control (media access control, MAC) entity sets this field to 0 if a P-MPR value is applied to meet MPE requirements specified in TS 38.101-2 [15]; or if *mpe-Reporting-FR2* is not configured or the serving cell does not operate on FR2, this field is set to 1. If *mpe-Reporting-FR2* is not configured or the serving cell operates on FR1, this field indicates whether a power fallback is applied due to power management, for example, P-MPRc specified in TS 38.101-1 [14], TS 38.101-2 [15], and TS 38.101-3 [16]. If the power fallback due to power management is not applied and the corresponding P_{CMAX,f,c} field has a different value, the MAC entity shall set this field to 1.

P_{CMAX,f,c}: If this field exists, this field indicates P_{CMAX,f,c} for an NR serving cell (as specified in TS 38.213 [6]) or P_{CMAX,f,c} for an E-UTRA serving cell (as specified in TS 38.213 [17]), to calculate the PH field. Reported P_{CMAX,f,c} and a nominal UE transmit power class are shown in the corresponding measured value (in dBm) for the NR serving cell as specified in TS 38.133 [11] or the corresponding measured value (in dBm) for the E-UTRA serving cell as specified in TS 36.133 [12].

MPE or DPC: If *mpe-Reporting-FR2* is configured and the serving cell operates on FR2 and if the P field is set to 1, this field indicates the applied power fallback to meet the MPE requirements as specified in TS 38.101-2 [15]. This field indicates an index of Table 6.1.3.8-3 and a corresponding P-MPR level measured value (in dBm) as specified in TS 38.133 [11]. If *dpc-Reporting-FR1* is configured and the serving cell operates on FR1, this field indicates ΔP_{PowerClass} as specified in TS 38.101-1 [14] and TS 38.101-3 [16]. This field indicates an index of Table 6.1.3.8-4 and a value of a DPC specified in TS 38.133 [11]. If the DPC reporting condition is not met, the DPC field is set to 0. A length of this field is 2 bits. If neither *mpe-Reporting-FR2* nor *dpc-Reporting-FR1* is configured, or if *mpe-Reporting-FR2* is configured and the serving cell operates on FR1, or if *dpc-Reporting-FR1* is configured and the serving cell operates on FR2, or if *mpe-Reporting-FR2* is configured and the P field is set to 0, the P field is replaced with R bits.

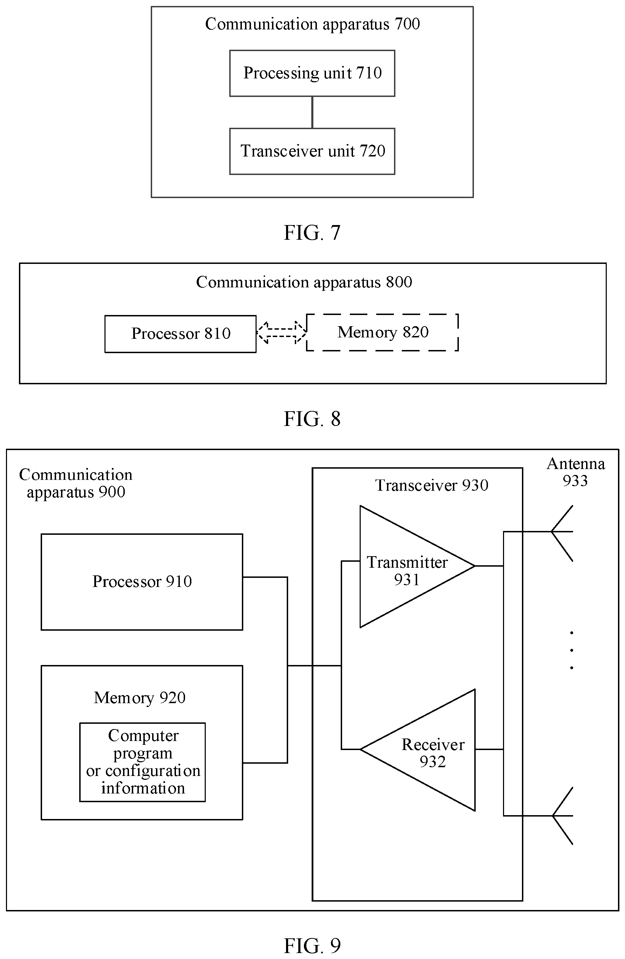

Communication apparatuses provided in embodiments of this application are described based on the following embodiments. FIG. 7 is a block diagram of a communication apparatus 700 according to an embodiment of this application. The communication apparatus 700 may correspondingly implement functions or steps implemented by the terminal device or the network device in the method embodiments. The communication apparatus may include a processing unit 710 and a transceiver unit 720. Optionally, the communication apparatus may further include a storage unit. The storage unit may be configured to store instructions (code or a program) and/or data. The processing unit 710 and the transceiver unit 720 may be coupled to the storage unit. For example, the processing unit 710 may read the instructions (the code or the program) and/or the data in the storage unit, to implement a corresponding method. The foregoing units may be independently disposed, or may be partially or completely integrated.

Optionally, the transceiver unit 720 may include a sending unit and a receiving unit. The sending unit may be configured to perform all sending operations performed by the communication apparatus 700, and the receiving unit may be configured to perform all receiving operations performed by the communication apparatus 700.

In some possible implementations, the communication apparatus 700 can correspondingly implement behavior and functions of the terminal device and the like in the foregoing method embodiments. For example, the communication apparatus 700 may be a terminal device, or may be a component (for example, a chip or a circuit) used in the terminal device. The transceiver unit 720 may be configured to perform all receiving or sending operations performed by the terminal device in the embodiment shown in FIG. 3, for example, S301 and S302 in the embodiment shown in FIG. 3, and/or another procedure used to support the technology described in this specification. The processing unit 710 is configured to perform all operations other than the receiving and sending operations performed by the terminal device in the embodiment shown in FIG. 3.

For example, the transceiver unit 720 is configured to receive configuration information from the network device, where the configuration information indicates a first quantity of times and a first random access resource corresponding to the first quantity of times. The first random access resource and the first quantity of times correspond to N beams, the first quantity of times is greater than 1, and N is an integer greater than 1. The processing unit 710 is configured to determine the N beams and the first random access resource. The transceiver unit 720 is further configured to send a first preamble based on the N beams and the first random access resource. A quantity of transmissions of the first preamble on the N beams is the first quantity of times.

In some possible implementations, the communication apparatus 700 can correspondingly implement behavior and functions of the network device in the foregoing method embodiments. For example, the communication apparatus 700 may be a network device, or may be a component (for example, a chip or a circuit) used in the network device. The transceiver unit 720 may be configured to perform all receiving or sending operations performed by the network device in the embodiment shown in FIG. 3, for example, S301 and S302 in the embodiment shown in FIG. 3, and/or another procedure used to support the technology described in this specification. The processing unit 710 is configured to perform all operations other than the receiving and sending operations performed by the network device in the embodiment shown in FIG. 3.

For example, the processing unit 710 is configured to determine configuration information, where the configuration information indicates a first quantity of times and a first random access resource corresponding to the first quantity of times. The first random access resource and the first quantity of times correspond to N beams, the first quantity of times is greater than 1, and N is an integer greater than 1. The transceiver unit 720 is configured to send the configuration information. The transceiver unit 720 is further configured to receive a first preamble on the first random access resource. A quantity of transmissions of the first preamble on the N beams is the first quantity of times.

For operations performed by the processing unit 710 and the transceiver unit 720, refer to the related descriptions in the foregoing method embodiments.

It should be understood that in this embodiment of this application, the processing unit 710 may be implemented by a processor or a processor-related circuit component, and the transceiver unit 720 may be implemented by a transceiver, a transceiver-related circuit component, or a communication interface.

Based on a same concept, as shown in FIG. 8, an embodiment of this application provides a communication apparatus 800. The communication apparatus 800 includes a processor 810. Optionally, the communication apparatus 800 may further include a memory 820, configured to: store instructions executed by the processor 810, or store input data that the processor 810 needs to run the instructions, or store data generated after the processor 810 runs the instructions. The processor 810 may implement the methods shown in the foregoing method embodiments based on the instructions stored in the memory 820.

Based on a same concept, as shown in FIG. 9, an embodiment of this application provides a communication apparatus 900. The communication apparatus 900 may be a chip or a chip system. Optionally, in this embodiment of this application, the chip system may include a chip, or may include a chip and another discrete device.

The communication apparatus 900 may include at least one processor 910. The processor 910 is coupled to a memory. Optionally, the memory may be located inside the apparatus, or may be located outside the apparatus. For example, the communication apparatus 900 may further include at least one memory 920. The memory 920 stores a computer program, configuration information, a computer program or instructions, and/or data necessary for implementing any one of the foregoing embodiments. The processor 910 may execute the computer program stored in the memory 920, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 910 may cooperate with the memory 920.

The communication apparatus 900 may further include a transceiver 930, and the communication apparatus 900 may exchange information with another device via the transceiver 930. The transceiver 930 may be a circuit, a bus, a transceiver, or any other apparatus that may be configured to exchange information, or is referred to as a signal transceiver unit. As shown in FIG. 9, the transceiver 930 includes a transmitter 931, a receiver 932, and an antenna 933. In addition, when the communication apparatus 900 is a chip-type apparatus or a circuit, the transceiver in the communication apparatus 900 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data. In this embodiment of this application, a specific connection medium between the transceiver 930, the processor 910, and the memory 920 is not limited.

In another possible implementation, the communication apparatus 900 may be used in a terminal device. Specifically, the communication apparatus 900 may be the terminal device, or may be an apparatus that can support the terminal device in implementing functions of the terminal device in any one of the foregoing embodiments. The memory 920 stores a computer program, a computer program or instructions, and/or data necessary for implementing functions of the communication apparatus in any one of the foregoing embodiments. The processor 910 may execute the computer program stored in the memory 920, to complete the method performed by the terminal device in any one of the foregoing embodiments.

In a possible implementation, the communication apparatus 900 may be used in a network device. Specifically, the communication apparatus 900 may be the network device, or may be an apparatus that can support the network device in implementing functions of the network device in any one of the foregoing embodiments. The memory 920 stores a computer program, a computer program or instructions, and/or data necessary for implementing functions of the network device in any one of the foregoing embodiments. The processor 910 may execute the computer program stored in the memory 920, to complete the method performed by the network device in any one of the foregoing embodiments.

The communication apparatus 900 provided in this embodiment may be used in the terminal device to complete the method performed by the terminal device, or may be used in the network device to complete the method performed by the network device. Therefore, for technical effects that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

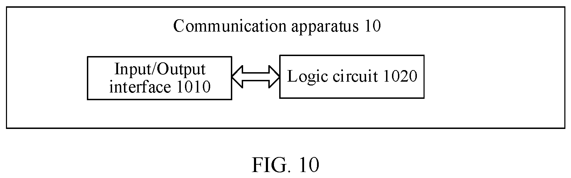

Refer to FIG. 10. Based on the foregoing embodiments, an embodiment of this application further provides another communication apparatus 10, including an input/output interface 1010 and a logic circuit 1020. The input/output interface 1010 is configured to receive code instructions and transmit the code instructions to the logic circuit 1020. The logic circuit 1020 is configured to run the code instructions to perform the method performed by the terminal device or the network device in any one of the foregoing embodiments.

Optionally, the input/output interface 1010 may be an interface on a chip, and the logic circuit 1020 may be one or more processors. Optionally, the one or more processors may be located in the apparatus, or may be located outside the apparatus.

The following describes in detail an operation performed by the communication apparatus used in a terminal device or a network device.

In an optional implementation, the communication apparatus 10 may be used in the terminal device to perform the method performed by the foregoing terminal device, specifically, for example, the method performed by the terminal device in the embodiment shown in FIG. 3.

For example, the input/output interface 1010 is configured to receive configuration information from the network device, where the configuration information indicates a first quantity of times and a first random access resource corresponding to the first quantity of times. The first random access resource and the first quantity of times correspond to N beams, the first quantity of times is greater than 1, and N is an integer greater than 1. The logic circuit 1020 is configured to determine the N beams and the first random access resource. The input/output interface 1010 is further configured to send a first preamble based on the N beams and the first random access resource. A quantity of transmissions of the first preamble on the N beams is the first quantity of times.

The communication apparatus 10 provided in this embodiment may be used in the terminal device to complete the method performed by the terminal device. Therefore, for technical effects that can be achieved by this embodiment, refer to the foregoing method embodiments. Details are not described herein again.

In an optional implementation, the communication apparatus 10 may be used in the network device to perform the method performed by the foregoing network device, specifically, for example, the method performed by the network device in the embodiment shown in FIG. 3.

For example, the logic circuit 1020 is configured to determine configuration information, where the configuration information indicates a first quantity of times and a first random access resource corresponding to the first quantity of times. The first random access resource and the first quantity of times correspond to N beams, the first quantity of times is greater than 1, and N is an integer greater than 1. The input/output interface 1010 is configured to send the configuration information. The input/output interface 1010 is further configured to receive a first preamble on the first random access resource. A quantity of transmissions of the first preamble on the N beams is the first quantity of times.

The communication apparatus 10 provided in this embodiment may be used in the network device to complete the method performed by the network device. Therefore, for technical effects that can be achieved by this embodiment, refer to the foregoing method embodiments. Details are not described herein again.

Based on the foregoing embodiments, an embodiment of this application further provides a communication system. The communication system includes at least one communication apparatus used in a terminal device and at least one communication apparatus used in a network device. For technical effects that can be achieved by this embodiment, refer to the foregoing method embodiments. Details are not described herein again.

Based on the foregoing embodiments, an embodiment of this application further provides a system. The communication system includes at least one network device and a terminal device.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement the functions of the communication apparatuses in FIG. 7 to FIG. 10, an embodiment of this application further provides a chip, including a processor, configured to support the communication apparatus in implementing the functions of the terminal device or the network device in the foregoing method embodiments. In a possible design, the chip is connected to a memory, or the chip includes the memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

The computer program or the instructions may alternatively be stored in a computer-readable memory that can indicate a computer or another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or the instructions may alternatively be loaded onto a computer or another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of the claims of this application and their equivalent technologies.

## Claims

1. A random access method, comprising:
receiving configuration information from a network device, wherein the configuration information indicates a first quantity of times and a first random access resource corresponding to the first quantity of times, wherein the first random access resource and the first quantity of times correspond to N beams, the first quantity of times is greater than 1, and N is an integer greater than 1; and
sending a first preamble based on the N beams and the first random access resource, wherein a quantity of transmissions of the first preamble on the N beams is the first quantity of times.

2. The method according to claim 1, wherein the configuration information further indicates a second quantity of times, and a quantity of transmissions of the first preamble on each of the N beams is the second quantity of times.

3. The method according to claim 1 or 2, wherein the first random access resource comprises a time domain resource for the first random access and/or the first preamble.

4. The method according to any one of claims 1 to 3, wherein sending the first preamble based on the N beams corresponds to first-type random access, and the configuration information further indicates a trigger event of the first-type random access, wherein the trigger event comprises one or more of the following:
beam failure recovery, radio connection establishment, radio connection resume, uplink synchronization, or cell handover.

5. The method according to any one of claims 1 to 4, further comprising:
receiving a random access response from the network device, wherein the random access response comprises an identifier of a part of random access resources among the first random access resource, and the identifier of the part of random access resources corresponds to a first beam in the N beams; and
sending uplink data and/or uplink control information based on the first beam.

6. The method according to any one of claims 1 to 5, wherein the configuration information further indicates a second random access resource, the second random access resource corresponds to one beam, and the first random access resource and the second random access resource correspond to a feature of message 1 repetition.

7. The method according to claim 6, wherein the first random access resource and the second random access resource belong to a same random access resource group.

8. The method according to claim 7, further comprising:
receiving, from the network device, a priority corresponding to the feature of the message 1 repetition, wherein the priority is used to select the random access resource group corresponding to the feature of the message 1 repetition.

9. The method according to any one of claims 1 to 8, wherein sending a preamble based on a plurality of beams corresponds to the first-type random access, sending a preamble based on one beam corresponds to second-type random access, the configuration information further indicates a first maximum quantity of transmissions, the first maximum quantity of transmissions is a maximum quantity of transmissions of the preamble of the first-type random access, and the first maximum quantity of transmissions is used to control a fallback from the first-type random access to the second-type random access, wherein
the preamble of the first-type random access comprises the first preamble.

10. The method according to claim 9, further comprising:
sending the preamble of the second-type random access when a quantity of transmissions of the preamble of the first-type random access reaches the first maximum quantity of transmissions.

11. The method according to any one of claims 1 to 8, wherein sending a preamble based on a plurality of beams corresponds to the first-type random access, sending a preamble based on one beam corresponds to second-type random access, the configuration information further indicates a second maximum quantity of transmissions, the second maximum quantity of transmissions is a maximum quantity of transmissions of the preamble of the second-type random access, and the second maximum quantity of transmissions is used to control a fallback from the second-type random access to the first-type random access; and
the sending the first preamble based on the N beams and the first random access resource comprises:
sending the first preamble based on the N beams and the first random access resource when a quantity of transmissions of the preamble of the second-type random access reaches the second maximum quantity of transmissions.

12. The method according to claim 9 or 11, wherein the configuration information further indicates a third maximum quantity of transmissions, and the third maximum quantity of transmissions is greater than or equal to the first maximum quantity of transmissions, and is greater than or equal to the second maximum quantity of transmissions; and
when a quantity of transmissions of a transmitted preamble reaches the third maximum quantity of transmissions, that a random access procedure fails is determined, wherein
the transmitted preamble comprises the preamble of the first-type random access and the preamble of the second-type random access.

13. A random access method, comprising:
sending configuration information, wherein the configuration information indicates a first quantity of times and a first random access resource corresponding to the first quantity of times, wherein the first random access resource and the first quantity of times correspond to N beams, the first quantity of times is greater than 1, and N is an integer greater than 1; and
receiving a first preamble on the first random access resource, wherein the first quantity of times indicates a quantity of transmissions of the first preamble on the N beams.

14. The method according to claim 13, wherein the configuration information further indicates a second quantity of times, and the second quantity of times indicates a quantity of transmissions of the first preamble on each of the N beams.

15. The method according to claim 13 or 14, wherein the first random access resource comprises a time domain resource for the first random access and/or the first preamble.

16. The method according to any one of claims 13 to 15, wherein that the first preamble is sent on the N beams corresponds to first-type random access, and the configuration information further indicates a trigger event of the first-type random access, wherein the trigger event comprises one or more of the following:
beam failure recovery, radio connection establishment, radio connection resume, uplink synchronization, and cell handover.

17. The method according to any one of claims 13 to 16, further comprising:
sending a random access response, wherein the random access response comprises an identifier of a part of random access resources among the first random access resource, and the identifier of the part of random access resources corresponds to a first beam in the N beams; and
receiving uplink data and/or uplink control information.

18. The method according to any one of claims 13 to 17, wherein the configuration information further indicates a second random access resource, the second random access resource corresponds to one beam, and the first random access resource and the second random access resource correspond to a feature of message 1 repetition.

19. The method according to claim 18, wherein the first random access resource and the second random access resource belong to a same random access resource group.

20. The method according to claim 19, further comprising:
sending a priority corresponding to the feature of the message 1 repetition, wherein the priority is used to select the random access resource group corresponding to the feature of the message 1 repetition.

21. The method according to any one of claims 13 to 20, wherein sending a preamble on a plurality of beams corresponds to the first-type random access, sending a preamble on one beam corresponds to second-type random access, the configuration information further indicates a first maximum quantity of transmissions, the first maximum quantity of transmissions is a maximum quantity of transmissions of the preamble of the first-type random access, and the first maximum quantity of transmissions is used to control a fallback from the first-type random access to the second-type random access, wherein
the preamble of the first-type random access comprises the first preamble.

22. The method according to any one of claims 13 to 21, wherein sending a preamble on a plurality of beams corresponds to the first-type random access, sending a preamble on one beam corresponds to the second-type random access, the configuration information further indicates a second maximum quantity of transmissions, the second maximum quantity of transmissions is a maximum quantity of transmissions of the preamble of the second-type random access, and the second maximum quantity of transmissions is used to control a fallback from the second-type random access to the first-type random access.

23. The method according to claim 21 or 22, wherein the configuration information further indicates a third maximum quantity of transmissions, and the third maximum quantity of transmissions is greater than or equal to the first maximum quantity of transmissions, and is greater than or equal to the second maximum quantity of transmissions, wherein the third maximum quantity of transmissions is used to control a random access procedure to fail.

24. A communication method, comprising:
sending a first report, wherein the first report comprises a first delta power class DPC field and a second DPC field, wherein when the first DPC field indicates a non-first value, the second DPC field indicates a DPC corresponding to a first band combination, and the first value corresponds to that a DPC reporting condition is not met.

25. The method according to claim 24, wherein when the first DPC field indicates the non-first value, the first DPC field indicates a DPC corresponding to a first cell, the first cell is a serving cell, and the first band combination comprises a carrier of the first cell.

26. The method according to claim 25, wherein the first DPC field is used to determine a first maximum transmit power of the first cell.

27. The method according to claim 26, wherein the first maximum transmit power of the first cell is greater than or equal to a first maximum transmit power of a first power class minus the DPC corresponding to the first cell, wherein
the first power class is a power before a fallback, and the second power class is a power after the fallback.

28. The method according to any one of claims 24 to 27, wherein the second DPC field is used to determine a second maximum transmit power of the first band combination.

29. The method according to claim 28, wherein the second maximum transmit power of the first band combination is less than or equal to a second maximum transmit power of the first power class minus the DPC corresponding to the first band combination, wherein
the first power class is the power before the fallback, and the second power class is the power after the fallback.

30. A communication method, comprising:
receiving a first report, wherein the first report comprises a first delta power class DPC field and a second DPC field, wherein when the first DPC field indicates a non-first value, the second DPC field indicates a DPC corresponding to a first band combination, and the first value corresponds to that a DPC reporting condition is not met.

31. The method according to claim 30, wherein when the first DPC field indicates the non-first value, the first DPC field indicates a DPC corresponding to a first cell, the first cell is a serving cell, and the first band combination comprises a carrier of the first cell.

32. The method according to claim 31, wherein the first DPC field is used to determine a first maximum transmit power of the first cell.

33. The method according to claim 32, wherein the first maximum transmit power of the first cell is greater than or equal to a first maximum transmit power of a first power class minus the DPC corresponding to the first cell, wherein
the first power class is a power before a fallback, and the second power class is a power after the fallback.

34. The method according to any one of claims 30 to 33, wherein the second DPC field is used to determine a second maximum transmit power of the first band combination.

35. The method according to claim 34, wherein the second maximum transmit power of the first band combination is less than or equal to a second maximum transmit power of the first power class minus the DPC corresponding to the first band combination, wherein
the first power class is the power before the fallback, and the second power class is the power after the fallback.

36. The method according to any one of claims 30 to 35, further comprising:
ignoring the second DPC field when the first DPC field indicates the first value.

37. A communication apparatus, comprising a unit configured to perform the method according to any one of claims 1 to 12.

38. A communication apparatus, comprising a unit configured to perform the method according to any one of claims 13 to 23.

39. A communication apparatus, comprising a unit configured to perform the method according to any one of claims 24 to 29.

40. A communication apparatus, comprising a unit configured to perform the method according to any one of claims 30 to 36.

41. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 12, the electronic apparatus is enabled to perform the method according to any one of claims 13 to 23, the electronic apparatus is enabled to perform the method according to any one of claims 24 to 29, or the electronic apparatus is enabled to perform the method according to any one of claims 30 to 36.

42. A communication system, comprising an apparatus configured to perform the method according to any one of claims 1 to 12 and an apparatus configured to perform the method according to any one of claims 13 to 23.

43. A communication system, comprising an apparatus configured to perform the method according to any one of claims 24 to 29 and an apparatus configured to perform the method according to any one of claims 30 to 36.

44. A chip system, wherein the chip system comprises:
a communication interface; and
a processor, configured to invoke and run the instructions through the communication interface, to enable a device on which the chip system is installed to perform the method according to any one of claims 1 to 12, enable a device on which the chip system is installed to perform the method according to any one of claims 13 to 23, enable a device on which the chip system is installed to perform the method according to any one of claims 24 to 29, or enable a device on which the chip system is installed to perform the method according to any one of claims 30 to 36.

45. A computer program product, comprising computer-executable instructions, wherein when the computer-executable instructions are run on a computer, the computer is enabled to perform the method according to any one of claims 1 to 12, the electronic apparatus is enabled to perform the method according to any one of claims 13 to 23, the electronic apparatus is enabled to perform the method according to any one of claims 24 to 29, or the electronic apparatus is enabled to perform the method according to any one of claims 30 to 36.

46. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 12, the electronic apparatus is enabled to perform the method according to any one of claims 13 to 23, the electronic apparatus is enabled to perform the method according to any one of claims 24 to 29, or the electronic apparatus is enabled to perform the method according to any one of claims 30 to 36.
